# EUROPÄISCHE PATENTSCHRIFT

(11) **EP 3 649 501 B1**
(45) Veröffentlichungstag und Bekanntmachung des Hinweises auf die Patenterteilung: **21.08.2024**
(21) Anmeldenummer: 19702097.7
(22) Anmeldetag: 04.02.2019
(51) Int. Cl.: G02B 21/00

(54) **VERFAHREN ZUM UNTERSUCHEN EINER FLÜSSIGKEIT, DIE WENIGSTENS EINE ZELLE UND/ODER WENIGSTENS EIN PARTIKEL ENTHÄLT**
METHOD FOR EXAMINING A LIQUID COMPRISING AT LEAST ONE CELL AND/OR AT LEAST ONE PARTICLE
MÉTHODE POUR ANALYSER UN LIQUIDE COMPRENANT AU MOINS UNE CELLULE ET/OU UNE PARTICULE

(30) Priorität: 23.04.2018 LU 100777
(43) Veröffentlichungstag der Anmeldung: 13.05.2020
(73) Patentinhaber: cytena GmbH, 79106 Freiburg (DE)
(72) Erfinder: SCHÖNDUBE, Jonas, 79108 Freiburg (DE); LAUTSCHAM, Lena, 79100 Freiburg (DE)
(74) Vertreter: Dennemeyer & Associates S.A.
(86) Internationale Anmeldenummer: PCT/EP2019/052564
(87) Internationale Veröffentlichungsnummer: WO 2019/206476

(56) Entgegenhaltungen:
- DE-U1- 202017 003 180
- BRAD LARSON: "Brightfield and Fluorescence Imaging using 3D PrimeSurface Ultra-Low Attachment Microplates", 1 January 2017 (2017-01-01), pages 1 - 6, XP055489837, Retrieved from the Internet <URL:https://www.biotek.com/assets/tech_resources/Brightfield%20and%20Fluorescent%20S-BIO%20Imaging%20App_Note.pdf> [retrieved on 20180703]
- NONE: "Durchflusszytometrie", WIKIPEDIA, 12 January 2017 (2017-01-12), pages 1 - 6, XP055489849, Retrieved from the Internet <URL:https://de.wikipedia.org/wiki/Durchflusszytometrie> [retrieved on 20180703]
- DAHLBERG PETER D ET AL: "A simple approach to spectrally resolved fluorescence and bright field microscopy over select regions of interest", REVIEW OF SCIENTIFIC INSTRUMENTS, AIP, MELVILLE, NY, US, vol. 87, no. 11, 29 November 2016 (2016-11-29), XP012214051, ISSN: 0034-6748, [retrieved on 20161129], DOI: 10.1063/1.4967274
- XUCAI CHEN ET AL: "Ultra-fast bright field and fluorescence imaging of the dynamics of micrometer-sized objects", REVIEW OF SCIENTIFIC INSTRUMENTS., vol. 84, no. 6, 1 June 2013 (2013-06-01), US, pages 063701, XP055489856, ISSN: 0034-6748, DOI: 10.1063/1.4809168

## Beschreibung

Die Erfindung betrifft ein Verfahren zum Untersuchen einer Flüssigkeit, die wenigstens eine Zelle und/oder wenigstens ein Partikel enthält. Darüber hinaus betrifft die Erfindung eine Verwendung einer Vorrichtung zum Ausführen eines solchen Verfahrens.

Aus dem Stand der Technik ist bekannt, dass Wirkstoffe, wie beispielsweise monoklonale Antikörper und andere Proteine mit Hilfe sogenannter monoklonaler Zelllinien hergestellt werden. Dies sind Populationen aus Zellen, die alle von einer einzelnen Mutterzelle abstammen. Das Herstellen von monoklonalen Zelllinien ist notwendig, da nur so sichergestellt werden kann, dass alle Zellen der Population ein annährend gleiches Genom haben, um die Wirkstoffe mit konstanter und reproduzierbare Qualität zu erzeugen.

Um eine monoklonale Zelllinie zu erzeugen, werden Zellen einzeln in Behältnisse einer Mikrotiterplatte überführt. Die zu überführenden Zellen werden hergestellt, indem eine Host-Zelllinie genetisch verändert wird und diese veränderten Zellen vereinzelt werden. Das Ablegen einzelner Zellen in die Mikrotiterplatten geschieht beispielsweise durch Dispensiervorrichtungen.

Seitens der Benutzer besteht die Anforderung, dass der Dispensiervorgang möglichst schnell erfolgt. Die Anforderung besteht vor dem Hintergrund, dass im Laborbetrieb pro Tag eine große Zahl von Zellen verarbeitet wird. Jedoch werden seitens der Benutzer auch Anforderungen gestellt, die einer schnellen Verarbeitung der Zellen hinderlich sind. So ist es beispielsweise seitens der Benutzer gewünscht, dass bei der Dispensiervorrichtung ein Ablageort in der Mikrotiterplatte abhängig von der Zelle ist. Insbesondere sollen beispielsweise fluoreszierende Zellen in einem anderen Bereich der Mikrotiterplatte abgelegt werden als nicht fluoreszierende Zellen.

Die bekannten Dispenser können diese Anforderungen nicht erfüllen. So muss beispielsweise bei dem Bestimmen von fluoreszierten Zellen eine hohe Belichtungszeit gewählt werden, damit brauchbare Fluoreszenzabbildungen erzeugt werden können. Diese Zeit steht jedoch in der Praxis oftmals nicht zur Verfügung. Außerdem ist es aufgrund der hohen Belichtungszeit nicht möglich, eine hohe Anzahl von Zellen zu dispensieren. Eine Verkürzung der Belichtungszeit führt jedoch dazu, dass die Fluoreszenzabbildung unbrauchbar ist oder dass basierend auf der Fluoreszenzabbildung beispielsweise der Ablageort nicht genau bestimmt werden kann. Insofern ist ein automatisches und schnelles Dispensieren nicht realisierbar. Weiterhin führen lange Belichtungszeiten oder wiederholtes Belichten zu einem ausbleichen des Fluoreszenzfarbstoffes. Es sollte daher sichergestellt werde, dass jede Zelle wenn möglich nur einmal und dann nur so lange wie nötig beleuchtet wird. Ansonsten werden die Messergebnisse verfälscht.

Darüber hinaus können bei den bekannten Dispensiervorrichtungen kleine Zellen und/oder nahezu transparente Zellen nicht oder nur schwer erkannt werden. Dementsprechend kann für derartige Zellen kein Ablageort automatisch bestimmt werden. Somit besteht die Gefahr, dass diese Zellen im Rahmen des Laborbetriebs verloren gehen oder manuell in den gewünschten Träger abgelegt werden müssen.

Brad Larson: "Brightfield and Fluorescence Imaging using 3D PrimeSurface Ultra-Low Attachment Microplates", 1 Januar 2017, XP055489837 offenbart ein Verfahren, mittels dem Hellfeld- und Fluoreszenzbilder erzeugt werden.

Durchflusszytometrie, Wikipedia, 12. Januar 2017, XP055489849 offenbart ein Verfahren, bei dem Fluoreszenz-markierte Zellen je nach Färbung in unterschiedliche Reagenzgefäße sortiert werden.

DE 20 2017 003 180 U1 offenbart eine Vorrichtung zum Detektieren von Zellen oder Partikeln in einem Fluidbehälter. Die Vorrichtung weist eine Detektionsvorrichtung auf, mittels der eine Detektion in einem definierten Teilvolumen erfolgt.

Dahlberg Peter D et al: "A simple approach to spectraly resolved fluorescence and bright field microscopy over select regions of interest", Review of Scientific Instruments, AlP, Melville, NY, US, Bd. 87, Nr. 11, 29 November 2016, XP 012214051 offenbart eine Vorrichtung mit einem Mikroskop und einer Kamera. Mittels der Vorrichtung können Hellfeldbilder und Fluoreszenzbilder erzeugt und ausgewertet werden.

Chen Xucai et al: "Ultra-fast bright field and fluorescence imaging of the dynamics of micrometer-sized objects", The Review of Scientific Instruments, Jun 2013, Bd. 84, Nr. 6, ISSN: 1089-7623 offenbart ein Verfahren, mittels dem Hellfeld- und Fluoreszenzbilder erzeugt werden können.

Eine Aufgabe der Erfindung besteht darin, ein Verfahren anzugeben, bei dem wenigstens ein Teil der oben genannten Nachteile nicht auftritt.

Die Aufgabe wird durch ein Verfahren zum Untersuchen einer Flüssigkeit, die wenigstens eine Zelle und/oder wenigstens ein Partikel enthält und in einem Dispenser angeordnet ist und durch einen Dispenser ausgebbar ist, mittels eines von einem Flüssigkeitsbereich ausgehenden ersten und zweiten Messsignals gelöst, wobei das Verfahren folgende Schritte aufweist:
a. Auslesen des ersten Messsignals und Auswerten des ersten Messsignals und
b. Bestimmen anhand des ausgewerteten ersten Messsignals, ob eine Detektion des zweiten Messsignals durchgeführt und ein Auslesen des detektierten zweiten Messsignals vollendet wird, oder ob ein Auslesen des detektierten zweiten Messsignals vollendet wird oder ob ein Auslesen des detektierten zweiten Messsignals abgebrochen wird,
wobei das erste Messsignal dahingehend ausgewertet wird, ob in dem Flüssigkeitsbereich wenigstens eine Zelle und/oder wenigstens ein Partikel angeordnet ist und wobei das zweite Messsignal detektiert und ausgelesen wird und/oder das Auslesen des zweiten Messsignals vollständig durchgeführt wird, wenn in dem Flüssigkeitsbereich wenigstens eine Zelle und/oder wenigstens ein Partikel angeordnet ist.

Die oben genannten Verfahrensschritte a und b werden in der angegebenen Reihenfolge durchgeführt.

Bei dem erfindungsgemäßen Verfahren wurde erkannt, dass das Untersuchen der Flüssigkeit, insbesondere des Flüssigkeitsbereichs, sehr schnell durchgeführt werden kann, wenn zwei unterschiedliche Messverfahren eingesetzt werden. Insbesondere kann ein erstes Messverfahren eingesetzt werden, aus dem das erste Messsignal resultiert. Der Vorteil des ersten Messverfahrens ist, dass das erste Messsignal schnell ausgelesen und/oder ausgewertet werden kann. Dagegen wird für das Auslesen und/oder Auswerten des zweiten Messsignals, das aus einem zweiten Messverfahren resultiert, mehr Zeit benötigt als zum Auslesen und/oder Auswerten des ersten Messsignals. Jedoch können, wie nachstehend näher ausgeführt wird, basierend auf dem zweiten Messsignal wenigstens eine für den Benutzer relevante Eigenschaft, insbesondere physikalische oder optische Eigenschaft, der Flüssigkeit und/oder der Zelle und/oder des Partikels im Flüssigkeitsbereich genau ermittelt werden.

Erfindungsgemäß wurde erkannt, dass die Abhängigkeit des zweiten Messsignals von dem ersten Messsignal den Vorteil bietet, dass der gesamte Untersuchungsvorgang schneller durchgeführt werden kann. So wird das zweite Messsignal nicht detektiert oder das bereits begonnene Auslesen des zweiten Messsignals wird abgebrochen, wenn sich bei dem Auswerten des ersten Messsignals ergibt, dass keine Notwendigkeit für das Detektieren und/oder das Auslesen des zweiten Messsignals besteht.

Für den Fall, dass nach dem Auslesen der in dem ersten Messsignal enthaltenen Informationen und dem Auswerten des ersten Messsignals das Untersuchen der Flüssigkeit nicht abgebrochen werden soll, wird das zweite Messsignal detektiert und das Auslesen der in dem detektierten zweite Messsignal enthaltenen Informationen wird vollendet. Dies bedeutet, dass das der Auslesevorgang des zweiten Messsignals vollständig durchgeführt wird.

Alternativ kann das bereits begonnene Auslesen der in dem zweiten Messsignal enthaltenen Informationen vollendet werden. Bei diesem Fall kann das zweite Messsignal zeitgleich oder zeitlich versetzt zu dem ersten Messsignal, insbesondere zeitlich vor dem Beenden des Auswertevorgangs des ersten Messsignals, detektiert worden sein.

Die Flüssigkeit kann eine Zellsuspension, die ein Wachstum der in der Flüssigkeit befindlichen Zellen fördern kann, und/oder Partikelsuspension sein. Das Partikel ist ein Glas- oder Polymerkügelchen und/oder weist eine vergleichbare Größe wie die Zelle auf.

Das erste Messsignal kann ein optisches Signal sein. Insbesondere kann das erste Messsignal ein von dem Flüssigkeitsbereich ausgehendes Hellfeldlicht sein. Das zweite Messsignal kann ein optisches Signal sein. Insbesondere kann das zweite Messsignal ein von dem Flüssigkeitsbereich ausgehendes Fluoreszenzlicht sein. Das erste Messsignal kann aus einem ersten optischen Messverfahren resultieren, das sich von einem zweiten optischen Messverfahren unterscheidet, aus dem das zweite Messsignal resultiert. Dabei kann das jeweilige optische Messverfahren ein Hellfeldverfahren, ein Dunkelfeldverfahren, ein Phasenkontrastverfahren, ein Konfokalverfahren oder ein Ramanspektroskopieverfahren sein.

Der Flüssigkeitsbereich ist ein Bereich der Flüssigkeit von dem das erste und zweite Messsignal ausgehen. Der Flüssigkeitsbereich entspricht einem Bereich, der, insbesondere optisch, betrachtet wird.

Die automatische Untersuchung der Flüssigkeit bedeutet, dass die Verfahrensschritte in einem Computer ausgeführt und somit nicht manuell durch den Benutzer durchgeführt werden.

Bei einer besonderen Ausführung kann das erste Messsignal dahingehend ausgewertet werden, ob in dem Flüssigkeitsbereich eine vorgegebene Anzahl von Zellen und/oder Partikeln angeordnet ist.

Die vorgegebene Anzahl kann den Wert 0 aufweisen, so dass im Flüssigkeitsbereich keine Zelle und/oder kein Partikel angeordnet ist. Alternativ kann die vorgegebene Anzahl einen Wert größer 0, insbesondere genau 1, aufweisen. Die vorgegebene Anzahl kann durch den Benutzer oder automatisch, insbesondere vor dem Durchführen des Verfahrens, eingestellt werden.

Eine einfache Weise zum Ermitteln, ob wenigstens eine, insbesondere genau eine einzige, Zelle und/oder wenigstens ein, insbesondere genau ein einziges, Partikel in dem Flüssigkeitsbereich angeordnet ist, kann darin bestehen, dass eine optische Eigenschaft des Flüssigkeitsbereichs basierend auf dem detektierten ersten Messsignal bestimmt wird. So kann beispielsweise durch Bestimmung des Kontrasts im Flüssigkeitsbereich ermittelt werden, ob eine Zelle und/oder ein Partikel im Flüssigkeitsbereich angeordnet ist. Natürlich können auch weitere optische Eigenschaften des Flüssigkeitsbereichs bestimmt werden, um zu ermitteln, ob wenigstens eine, insbesondere genau eine einzige, Zelle und/oder wenigstens ein, insbesondere genau ein einziges, Partikel in dem Flüssigkeitsbereich angeordnet ist.

Das detektierte erste Messsignal kann zum Erzeugen einer Hellfeldabbildung genutzt werden. Zudem kann zum Bestimmen, ob eine, insbesondere genau eine einzige, Zelle und/oder ein, insbesondere genau ein einziges, Partikel in dem Flüssigkeitsbereich angeordnet ist, die optische Eigenschaft des Flüssigkeitsbereichs basierend auf der Hellfeldabbildung bestimmt werden.

Dies ist vorteilhaft, weil eine Hellfeldabbildung sehr schnell erzeugt werden kann. Insofern kann sehr schnell ermittelt werden, ob eine, insbesondere genau eine einzige, Zelle und/oder ein, insbesondere genau ein einziges, Partikel in dem Flüssigkeitsbereich angeordnet ist und/oder ob eine vorgegebene Anzahl an Zellen und/oder Partikeln in dem Flüssigkeitsbereich angeordnet ist. Darüber hinaus bietet das Erzeugen von Hellfeldabbildungen den Vorteil, dass Zellen und/oder Partikel einfach erkannt werden können. Darüber hinaus können bei Hellfeldabbildungen auch Bereiche der Zelle und/oder Partikel untersucht werden, die keine fluoreszierende Substanz aufweisen. Auch können bei Hellfeldabbildungen die Zellen und/oder Partikel, insbesondere deren Eigenschaften, wie beispielsweise Größe und/oder Lage und/oder Morphologie und/oder Granularität und/oder Farbe, genau ermittelt werden.

Das zweite Messsignal wird nicht detektiert und somit auch nicht ausgelesen, wenn in dem Flüssigkeitsbereich keine Zelle und/oder kein Partikel angeordnet ist. Darüber hinaus kann das zweite Messsignal nicht detektiert und somit auch nicht ausgelesen werden, wenn in dem Flüssigkeitsbereich nicht die vorgegebene Anzahl von Zellen und/oder Partikeln angeordnet ist.

Außerdem kann das bereits begonnene Auslesen des zweiten Messsignals abgebrochen werden, wenn in dem Flüssigkeitsbereich keine Zelle und/oder kein Partikel angeordnet ist. Darüber hinaus kann das begonnene Auslesen des zweiten Messsignals abgebrochen werden, wenn in dem Flüssigkeitsbereich nicht die vorgegebene Anzahl von Zellen und/oder Partikeln angeordnet ist. Im Ergebnis kann abhängig davon, ob eine Zelle und/oder ein Partikel im Flüssigkeitsbereich angeordnet ist und/oder ob die vorgegebene Anzahl an Zellen und/oder Partikeln in dem Flüssigkeitsbereich angeordnet sind, entschieden werden, ob das zweite Messsignal detektiert und/oder ob das bereits begonnene Auswerten des detektierten zweiten Messsignals vollendet wird. Dies ist insofern vorteilhaft, weil die Präsenz der wenigstens einen, insbesondere einen einzigen, Zelle und/oder des, insbesondere einen einzigen, Partikels in dem Flüssigkeitsbereich sehr schnell ermittelt werden kann.

Bei einer besonderen Ausführung kann das zweite Messsignal detektiert und ausgelesen werden, wenn in dem Flüssigkeitsbereich wenigstens eine Zelle, insbesondere genau eine einzige Zelle, und/oder wenigstens ein Partikel, insbesondere genau ein einziges Partikel, angeordnet ist. Dies bedeutet, dass das zweite Messsignal detektiert und vollständig ausgelesen wird. Dazu kann eine Belichtungszeit einer Detektionseinrichtung derart angepasst werden, damit die Detektionseinrichtung ausreichend lang dem zweiten Messsignal ausgesetzt ist, dass bestimmte Eigenschaften der Zelle und/oder Partikel, erfasst werden können und/oder basierend auf dem zweiten Messsignal Abbildungen mit hoher Auflösung erzeugt werden können. Darüber hinaus kann das zweite Messsignal detektiert und/oder ausgelesen werden, wenn in dem Flüssigkeitsbereich die vorgegebene Anzahl an Zellen und/oder Partikeln angeordnet ist.

Das bereits begonnene Auslesen des zweiten Messsignals kann vollständig durchgeführt werden, wenn in dem Flüssigkeitsbereich wenigstens eine, insbesondere genau eine einzige, Zelle und/oder wenigstens ein, insbesondere genau ein einziges, Partikel angeordnet ist. Darüber hinaus kann das bereits begonnene Auslesen des zweiten Messsignals vollständig durchgeführt werden, wenn in dem Flüssigkeitsbereich die vorgegebene Anzahl an Zellen und/oder Partikeln angeordnet ist.

Das detektierte zweite Messsignal kann, insbesondere zum Bestimmen der Eigenschaft der in dem Flüssigkeitsbereich befindlichen Flüssigkeit und/oder der Zelle und/oder des Partikels, dahingehend ausgewertet werden, ob der Flüssigkeitsbereich nicht fluoresziert und/oder ob eine in dem Flüssigkeitsbereich enthaltene Zelle nicht fluoresziert und/oder ob ein in dem Flüssigkeitsbereich enthaltenes Partikel nicht fluoresziert. Darüber hinaus kann das zweite Messsignal dahingehend ausgewertet werden, ob der Flüssigkeitsbereich fluoresziert und/oder ob in dem Flüssigkeitsbereich eine fluoreszierende Zelle und/oder ein fluoreszierendes Partikel enthalten ist.

Im Ergebnis kann durch Auswerten des zweiten Messsignals auf einfache Weise die Eigenschaft der Zelle und/oder des Partikels und/oder der Flüssigkeit im Flüssigkeitsbereich genau ermittelt werden. Dies ist möglich, weil bei der Ermittlung, ob die Zelle und/oder das Partikel und/oder die Flüssigkeit fluoresziert die Detektionseinrichtung ausreichend lang dem von der Zelle und/oder dem Partikel ausgehenden Fluoreszenzlicht ausgesetzt wird. Indem die Belichtungszeit der Detektionseinrichtung erhöht wird, können Fluoreszenzabbildungen mit einer hohen Auflösung und einem hohen Helligkeitsspektrum erhalten werden. Dies ermöglicht, dass die fluoreszierende Zelle und/oder das fluoreszierende Partikel und/oder die fluoreszierende Flüssigkeit genau bestimmt werden kann.

Bei einer besonderen Ausführung kann der Flüssigkeitsbereich mit einem ersten Beleuchtungslicht beleuchtet werden, woraufhin das erste Messsignal von dem Flüssigkeitsbereich ausgeht. Darüber hinaus kann der Flüssigkeitsbereich mit einem zweiten Beleuchtungslicht beleuchtet werden, woraufhin das zweite Messsignal von dem Flüssigkeitsbereich ausgeht. Das erste Beleuchtungslicht unterscheidet sich von dem zweiten Beleuchtungslicht in wenigstens einer, insbesondere optischen, Eigenschaft. Insbesondere unterscheidet sich das erste Beleuchtungslicht von dem zweiten Beleuchtungslicht in wenigstens einer der nachfolgenden Eigenschaften Wellenlänge, Intensität, Polarisierung, Kollimierung und/oder Ausrichtung.

Bei einer Ausführung kann das zweite Beleuchtungslicht durch die Zelle, insbesondere eine fluoreszierende Substanz der Zelle, und/oder das Partikel, insbesondere eine fluoreszierende Substanz des Partikels absorbiert werden und somit die Zelle und/oder das Partikel anregen. In diesem Fall entspricht das zweite Messsignal dem von der Zelle, insbesondere der fluoreszierenden Substanz in oder an der Zelle, und/oder dem Partikel, insbesondere der fluoreszierenden Substanz in oder an dem Partikel, emittierten Fluoreszenzlicht. Die fluoreszierende Substanz kann in bestimmten Bereichen der Zelle und/oder des Partikels vorliegen.

Der Flüssigkeitsbereich kann nach, insbesondere einer vorgegebenen Zeitdauer, erneut mit dem ersten Beleuchtungslicht beleuchtet werden, wenn keine Zelle und/oder kein Partikel in dem Flüssigkeitsbereich angeordnet ist und/oder wenn in dem Flüssigkeitsbereich nicht die vorgegebene Anzahl von Zellen und/oder Partikeln angeordnet ist. Bei einem Dispenser, mittels dem Flüssigkeit, insbesondere ein Flüssigkeitstropfen, ausgegeben werden kann, kann das erneute Beleuchten des Flüssigkeitsbereichs mit dem ersten Beleuchtungslicht nach Ausgabe der Flüssigkeit erfolgen, die mit einem vorherigen ersten Beleuchtungslicht bereits beleuchtet wurde.

Darüber hinaus kann ein detektiertes weiteres erste Messsignal nach, insbesondere einer vorgegebenen Zeitdauer, ausgelesen und ausgewertet werden, wenn keine Zelle und/oder kein Partikel in dem Flüssigkeitsbereich angeordnet ist und/oder wenn in dem Flüssigkeitsbereich nicht die vorgegebene Anzahl von Zellen und/oder Partikeln angeordnet ist. Das weitere erste Messsignal resultiert aus dem erneuten Beleuchten des Flüssigkeitsbereichs mit dem ersten Beleuchtungslicht.

Darüber hinaus können andere erste Messsignal, insbesondere in schneller Folge, mehrmals hintereinander ausgelesen und ausgewertet werden. Dies ist möglich, weil die jeweilige Zeitdauer für das Auslesen und das Auswerten des ersten Messsignals klein ist. Dabei ist es möglich, dass die Zeitdauer zum Durchführen von wenigstens zwei Auslesevorgängen und Auswertevorgängen des ersten Messsignals kleiner ist als die Zeitdauer, die zum Auslesen des zweiten Messsignals benötigt wird.

Das zweite Beleuchtungslicht kann nur dann ausgestrahlt werden, wenn wenigstens eine Zelle, insbesondere genau eine einzige Zelle, und/oder wenigstens ein Partikel, insbesondere genau ein einziges Partikel, in dem Flüssigkeitsbereich angeordnet ist und/oder wenn in dem Flüssigkeitsbereich die vorgegebene Anzahl von Zellen und/oder Partikeln angeordnet ist. Dies bedeutet, dass das zweite Beleuchtungslicht nicht ausgestrahlt wird, solange keine Zelle und/oder kein Partikel in dem Flüssigkeitsbereich angeordnet ist und/oder solange die Anzahl der Zellen und/oder Partikel in dem Flüssigkeitsbereich nicht der vorgegebenen Anzahl der Zellen und/oder Partikel entspricht. Dies bietet den Vorteil, dass bei Ausführungen, bei denen ermittelt werden soll, ob in dem Flüssigkeitsbereich eine fluoreszierende Zelle und/oder ein fluoreszierendes Partikel angeordnet ist, ein Bleichen der Zelle und/oder des Partikels zumindest verringert werden kann im Vergleich zu Ausführungen, bei denen die Zelle und/oder das Partikel permanent mit dem zweiten Beleuchtungslicht beleuchtet wird.

Bei einer besonderen Ausführung kann der Flüssigkeitsbereich durch das erste Beleuchtungslicht und das zweite Beleuchtungslicht zeitgleich beleuchtet werden. Dies bietet den Vorteil, dass nicht das Auswerten des ersten Messsignals abgewartet werden muss, bevor das zweite Beleuchtungslicht ausgestrahlt wird. Ein derartiges Verfahren bietet den Vorteil, dass die Eigenschaft der Zelle und/oder des Partikels schnell ermittelt werden kann. Darüber hinaus kann der Flüssigkeitsbereich mit dem zweiten Beleuchtungslicht beleuchtet werden, während das erste Messsignal ausgewertet wird. Insbesondere kann der Flüssigkeitsbereich mit dem zweiten Beleuchtungslicht beleuchtet werden, während ermittelt wird, ob eine Zelle und/oder ein Partikel in dem Flüssigkeitsbereich angeordnet ist und/oder ob in dem Flüssigkeitsbereich die vorgegebene Anzahl von Zellen und/oder Partikeln angeordnet ist. Dabei kann zu demselben Zeitpunkt begonnen werden, den Flüssigkeitsbereich mit dem ersten Beleuchtungslicht und dem zweiten Beleuchtungslicht zu beleuchten.

Das Auslesen des zweiten Messsignals kann länger dauern als das Auslesen des ersten Messsignals. Dies ist insbesondere der Fall, wenn das erste Messsignal das Hellfeldlicht und das zweite Messsignal das Fluoreszenzlicht ist. Gleichermaßen kann das Auswerten des zweiten Messsignals länger dauern als das Auswerten des ersten Messsignals.

Nach dem Untersuchen der Flüssigkeit kann somit bekannt sein, ob in dem Flüssigkeitsbereich eine vorgegebene Anzahl an fluoreszierenden Zellen und/oder fluoreszierenden Partikel angeordnet sind. Vorzugsweise ist gewünscht, dass in dem Flüssigkeitsbereich eine einzige fluoreszierende Zelle und/oder ein einziges fluoreszierendes Partikel angeordnet ist.

Die oben genannte Aufgabe wird auch durch ein Verfahren zum Untersuchen einer Flüssigkeit, die wenigstens eine Zelle und/oder wenigstens ein Partikel enthält und in einem Dispenser angeordnet ist und durch einen Dispenser ausgebbar ist, mittels eines von einem Flüssigkeitsbereich ausgehenden ersten und zweiten Messsignals gelöst, wobei
a. das zweite Messsignal ausgelesen und ausgewertet wird, um zu ermitteln, ob wenigstens eine Zelle, insbesondere eine einzige Zelle, und/oder wenigstens ein Partikel, insbesondere ein einziges Partikel, in dem Flüssigkeitsbereich angeordnet ist, und
b. das erste Messsignal ausgelesen und ausgewertet wird, um eine Eigenschaft der Zelle und/oder des Partikels zu bestimmen, wenn eine Zelle und/oder ein Partikel in dem Flüssigkeitsbereich angeordnet ist, wobei das Auslesen des zweiten Messsignals länger dauert als das Auslesen des ersten Messsignals und/oder das Auswerten des zweiten Messsignals länger dauert als das Auswerten des ersten Messsignals.

Die oben genannten Verfahrensschritte a und b werden in der angegebenen Reihenfolge durchgeführt.

Das erfindungsgemäße Verfahren weist den Vorteil auf, dass die Präsenz von sehr kleinen und/oder nahezu transparenten Zellen und/oder Partikeln auf einfache Weise ermittelt werden kann. Insbesondere es mit dem Verfahren möglich, zu ermitteln, ob in dem Flüssigkeitsbereich sehr kleine und/oder nahezu transparente Zellen und/oder Partikel vorhanden sind.

Das erfindungsgemäße Verfahren weist den Vorteil auf, dass durch Verwendung von zwei unterschiedlichen optischen Messerfahren einerseits die Präsenz wenigstens einer Zelle und/oder eines Partikels in dem Flüssigkeitsbereich genau und andererseits eine Eigenschaft der Zelle und/oder des Partikels auf einfache Weise ermittelt werden kann.

Das erste Messsignal kann ein optisches Signal sein. Insbesondere kann das erste Messsignal ein von dem Flüssigkeitsbereich ausgehendes Hellfeldlicht sein. Das zweite Messsignal kann ein optisches Signal sein. Insbesondere kann das zweite Messsignal ein von dem Flüssigkeitsbereich ausgehendes Fluoreszenzlicht sein. Das erste Messsignal kann aus einem ersten optischen Messverfahren resultieren, das sich von einem zweiten optischen Messverfahren unterscheidet, aus dem das zweite Messsignal resultiert. Dabei kann das jeweilige optische Messverfahren ein Hellfeldverfahren, ein Dunkelfeldverfahren, ein Phasenkontrastverfahren, ein Konfokalverfahren oder ein Ramanspektroskopieverfahren sein.

Die mittels des erfindungsgemäßen Verfahrens zu bestimmende Eigenschaft einer Zelle und/oder eines Partikels kann eine physikalische und/oder optische Eigenschaft der Zelle und/oder des Partikels sein. Beispielhaft kann die zu bestimmende Eigenschaft der Zelle und/oder des Partikels die Morphologie und/oder Granularität und/oder Transparenz und/oder Größe und/oder Farbe der Zelle und/oder des Partikels sein.

Der Flüssigkeitsbereich ist ein Bereich der Flüssigkeit von dem das erste und zweite Messsignal ausgehen. Der Flüssigkeitsbereich entspricht einem Bereich, der, insbesondere optisch, betrachtet wird.

Die automatische Untersuchung der Flüssigkeit bedeutet, dass die Verfahrensschritte in einem Computer ausgeführt und somit nicht manuell durch den Benutzer durchgeführt werden.

Das erste Messsignal kann ausgelesen und ausgewertet werden, um eine Eigenschaft der Zelle und/oder des Partikels zu bestimmen, wenn in dem Flüssigkeitsbereich eine vorgegebene Anzahl an Zellen und/oder Partikeln angeordnet ist. Die Anzahl kann den Wert 0 aufweisen, so dass im Flüssigkeitsbereich keine Zelle und/oder kein Partikel aufweisen. Alternativ kann die Anzahl den Wert größer 0, insbesondere genau 1, aufweisen.

Bei einer besonderen Ausführung kann nach dem Auslesen der in dem zweiten Messsignal enthaltenen Informationen das zweite Messsignal ausgewertet werden, um die Lage von wenigstens einer, insbesondere einer einzigen, Zelle und/oder von wenigstens einem, insbesondere einem einzigen, Partikel in dem Flüssigkeitsbereich zu ermitteln. Dies bietet den Vorteil, dass mittels des anschließenden ersten Messverfahrens dieser Bereich genauer untersucht werden kann. Insbesondere können die im ersten Messsignal enthaltenen Informationen ausgelesen werden und es kann basierend auf dem ersten Messsignal, insbesondere der aus dem ersten Messsignal ausgelesenen Informationen, eine Abbildung erzeugt werden, die eine hohe Auflösung des Abschnitts aufweist, in dem die Zelle und/oder das Partikel angeordnet sind. Außerdem kann die Auswertung des ersten Messsignals schneller erfolgen, weil nur der die Zelle und/oder das Partikel enthaltende Abschnitt des Flüssigkeitsbereichs untersucht werden muss.

Das zweite Messsignal kann dahingehend ausgewertet werden, ob eine, insbesondere eine einzige, fluoreszierende Zelle und/oder ein, insbesondere eine einziges, fluoreszierendes Partikel in dem Flüssigkeitsbereich angeordnet ist. Darüber hinaus kann das zweite Messsignal dahingehend ausgewertet werden, ob die vorgegebene Anzahl von fluoreszierenden Zellen und/oder Partikeln in dem Flüssigkeitsbereich angeordnet sind.

Dabei kann das zweite Messsignal zum Erzeugen einer Fluoreszenzabbildung genutzt werden. Die Fluoreszenzabbildung kann zum Bestimmen, ob eine, insbesondere einzige, fluoreszierende Zelle und/oder ein, insbesondere einziges, fluoreszierendes Partikel in dem Flüssigkeitsbereich angeordnet ist, genutzt werden. Dadurch lässt sich auf einfache Weise ermitteln, ob in dem Flüssigkeitsbereich wenigstens eine, insbesondere eine einzige, fluoreszierende Zelle und/oder ein, insbesondere einziges, fluoreszierendes Partikel angeordnet ist und/oder ob die vorgegebene Anzahl von fluoreszierenden Zellen und/oder Partikeln in dem Flüssigkeitsbereich angeordnet ist.

Bei einer besonderen Ausführung kann der Flüssigkeitsbereich mit einem ersten Beleuchtungslicht beleuchtet werden, woraufhin das erste Messsignal von dem Flüssigkeitsbereich ausgeht. Darüber hinaus kann der Flüssigkeitsbereich mit einem zweiten Beleuchtungslicht beleuchtet werden, woraufhin das zweite Messsignal von dem Flüssigkeitsbereich ausgeht. Das erste Beleuchtungslicht unterscheidet sich von dem zweiten Beleuchtungslicht in wenigstens einer, insbesondere optischen, Eigenschaft. Insbesondere unterscheidet sich das erste Beleuchtungslicht von dem zweiten Beleuchtungslicht in wenigstens der nachfolgenden Eigenschaften Wellenlänge, Intensität, Polarisierung, Kollimierung und/oder Ausrichtung.

Bei einer Ausführung kann das zweite Beleuchtungslicht durch die Zelle, insbesondere eine fluoreszierende Substanz der Zelle, und/oder das Partikel, insbesondere eine fluoreszierende Substanz des Partikels absorbiert werden und somit die Zelle und/oder das Partikel anregen. In diesem Fall entspricht das zweite Messsignal dem von der Zelle, insbesondere der fluoreszierenden Substanz der Zelle, und/oder dem Partikel, insbesondere der fluoreszierenden Substanz des Partikels, emittierten Fluoreszenzlicht.

Bei einer besonderen Ausführung kann der Flüssigkeitsbereich, insbesondere nach einer vorgegebenen Zeitdauer, erneut mit dem zweiten Beleuchtungslicht beleuchtet werden, wenn keine Zelle und/oder kein Partikel in dem Flüssigkeitsbereich angeordnet ist und/oder wenn in dem Flüssigkeitsbereich nicht die vorgegebene Anzahl an fluoreszierenden Zellen und/oder fluoreszierenden Partikeln angeordnet ist. Bei einem Dispenser, mittels dem Flüssigkeit ausgegeben werden kann, kann das erneute Beleuchten des Flüssigkeitsbereichs des Dispensers mit dem zweiten Beleuchtungslicht nach Ausgabe der Flüssigkeit erfolgen, die mit vorherigem zweiten Beleuchtungslicht bereits beleuchtet wurde.

Darüber hinaus kann ein detektiertes weiteres zweites Messsignal, insbesondere nach einer vorgegebenen Zeitdauer, ausgelesen und ausgewertet werden, wenn keine Zelle und/oder kein Partikel in dem Flüssigkeitsbereich angeordnet ist und/oder wenn in dem Flüssigkeitsbereich nicht die vorgegebene Anzahl an fluoreszierenden Zellen und/oder fluoreszierenden Partikeln angeordnet ist. Das weitere zweite Messsignal resultiert aus dem erneuten Beleuchten des Flüssigkeitsbereichs mit dem zweiten Beleuchtungslicht. Darüber hinaus können andere zweite Messsignale, insbesondere in schneller Folge, mehrmals hintereinander ausgelesen und ausgewertet werden.

Das Beleuchten des Flüssigkeitsbereichs mit dem zweiten Beleuchtungslicht kann beendet werden, wenn eine, insbesondere einzige, fluoreszierende Zelle und/oder ein, insbesondere einziges, fluoreszierendes Partikel in dem Flüssigkeitsbereich angeordnet ist und/oder wenn in dem Flüssigkeitsbereich die vorgegebene Anzahl an fluoreszierenden Zellen und/oder fluoreszierenden Partikeln angeordnet ist.

Dadurch wird die Zelle und/oder das Partikel nur solange wie notwendig dem zweiten Beleuchtungslicht ausgesetzt. Dadurch kann ein Bleichen der Zelle zumindest verlangsamt werden.

Das erste Beleuchtungslicht kann ausgestrahlt werden, nachdem ermittelt wurde, dass eine, insbesondere einzige, fluoreszierende Zelle und/oder ein, insbesondere einziges, fluoreszierendes Partikel in dem Flüssigkeitsbereich angeordnet ist und/oder nachdem ermittelt wurde, dass die vorgegebene Anzahl an fluoreszierenden Zellen und/oder fluoreszierenden Partikeln in dem Flüssigkeitsbereich angeordnet ist.

Dementsprechend kann das erste Messsignal ausgelesen werden, nachdem ermittelt wurde, dass eine, insbesondere einzige, fluoreszierende Zelle und/oder ein, insbesondere einziges, fluoreszierendes Partikel in dem Flüssigkeitsbereich angeordnet ist und/oder nachdem ermittelt wurde, dass die vorgegebene Anzahl an fluoreszierenden Zellen und/oder fluoreszierenden Partikeln in dem Flüssigkeitsbereich angeordnet ist. Dies bietet den Vorteil, dass der Auswertevorgang schnell ablaufen kann, weil die Lage der Zelle und/oder des Partikels bereits bekannt ist und daher nur dieser Teil ausgewertet werden muss. Darüber hinaus besteht aufgrund der Kenntnis der Lage der Zelle und/oder des Partikels die Möglichkeit diesen Bereich besonders genau optisch zu erfassen.

Das erste Messsignal kann zum Erzeugen von einer Hellfeldabbildung genutzt werden. Dies bietet den Vorteil, dass die Hellfeldabbildung schnell erzeugt werden kann und somit dem Benutzer eine Abbildung des Flüssigkeitsbereichs an einem Anzeigegerät schnell angezeigt werden kann.

Das erste Beleuchtungslicht kann ausgestrahlt werden, während ermittelt wird, ob eine, insbesondere einzige, fluoreszierende Zelle und/oder ein, insbesondere einziges, fluoreszierendes Partikel in dem Flüssigkeitsbereich angeordnet ist und/oder während ermittelt wird, ob die vorgegebene Anzahl an fluoreszierenden Zellen und/oder fluoreszierenden Partikeln in dem Flüssigkeitsbereich angeordnet ist.

Bei beiden oben beschriebenen Verfahren zum Untersuchen der Flüssigkeit können die nachfolgend genannten Verfahrensschritte durchgeführt werden.

So ist die Flüssigkeit, insbesondere der Flüssigkeitsbereich, in einem Dispenser angeordnet. Der Dispenser kann die Flüssigkeit, insbesondere den Flüssigkeitsbereich, ausgeben. Der Flüssigkeitsbereich kann einem Bereich entsprechen, das ein Volumen aufweist, das pro Flüssigkeitsausgabe von dem Dispenser ausgegeben wird. Dies bedeutet, dass durch Betrachten des Flüssigkeitsbereichs dem Benutzer die Anzahl und/oder Art der in der ausgegebenen Flüssigkeit enthaltenen Zellen und/oder Partikel bekannt ist. Der Flüssigkeitsbereich kann wenigstens teilweise in einer Düse des Dispensers angeordnet sein. Die auszugebende Flüssigkeit kann in ein Behältnis eines Trägers ausgegeben werden. Der Träger kann ein oder mehrere Behältnisse aufweisen. Insbesondere kann der Träger eine Mikrotiterplatte mit mehreren Behältnissen sein.

Dabei kann ein Dispensiervorgang basierend auf dem ersten und/oder zweiten Messsignal gesteuert werden. Insbesondere kann beim Dispensiervorgang ein Ablageort der Zelle und/oder des Partikels, die Anzahl der auszugebenden Flüssigkeitstropfen, der Ausgabezeitpunkt und das Ausgabevolumen basierend auf dem ersten und/oder zweiten Messsignal gesteuert werden.

Die Flüssigkeitsausgabe kann nach einer Drop-on-Demand Methodik durchgeführt werden. Bei der Drop-on-Demand Methodik erfolgt eine gezielte Abgabe eines einzigen Flüssigkeitstropfens zu einem gewählten Zeitpunkt. Im Gegensatz dazu wird bei einer Continuous-Jet Methodik ein kontinuierlicher Flüssigkeitsstrahl ausgegeben, der nach dem Austritt in einzelne Tropfen zerfällt. Die Continuous-Jet Methodik unterscheidet sich somit von der Drop-on-Demand Methodik darin, dass nicht für jeden Flüssigkeitstropfen ein separates Ansteuersignal vorgesehen ist und die einzelnen Flüssigkeitstropfen nicht gezielt zu einem gewählten Zeitpunkt erzeugt werden können.

Die auszugebende Flüssigkeit kann nach Bestimmen eines Ablageorts basierend auf dem ersten und/oder zweiten Messsignal ausgegeben werden. Die Ausgabe kann in das Behältnis des Trägers erfolgen. Dabei kann das Bestimmen des Ablageorts und/oder das Ablegen der Flüssigkeit in das Behältnis automatisch erfolgen. Dies bedeutet, dass das Bestimmen des Ablageorts durch eine nachstehend näher beschriebene Vorrichtung ohne Beeinflussung durch den Benutzer erfolgt.

Der Ablageort der auszugebenden Flüssigkeit kann davon abhängen, ob die Zelle und/oder das Partikel fluoresziert oder nicht. Alternativ oder zusätzlich kann der Ablageort von der Eigenschaft der Zelle und/oder des Partikels, wie beispielsweise der Größe, Rundheit, etc. der Zelle und/oder des Partikels, abhängen. Außerdem kann der Ablageort der auszugebenden Flüssigkeit von dem Fluoreszenzlicht, insbesondere der Intensität des Fluoreszenzlichts, abhängen.

Der Träger kann eine Vielzahl von Behältnissen aufweisen. Dabei kann ein Behältnis des Trägers zur Aufnahme einer Flüssigkeit, die eine, insbesondere einzige, fluoreszierende Zelle und/oder ein, insbesondere einziges, fluoreszierendes Partikel enthält, bestimmt sein und ein anderes Behältnis des Trägers kann zur Aufnahme einer Flüssigkeit, die keine fluoreszierende Zelle und/oder kein fluoreszierendes Partikel enthält, bestimmt sein. Die Flüssigkeit, die wenigstens eine, insbesondere eine einzige, fluoreszierende Zelle und/oder wenigstens ein, insbesondere ein einziges, fluoreszierendes Partikel enthält, kann vom Dispenser in das Behältnis, eingegeben werden und/oder die Flüssigkeit, die keine fluoreszierende Zelle und/oder kein fluoreszierendes Partikel enthält, kann vom Dispenser in das andere Behältnis eingegeben werden.

Insbesondere kann der Träger eine erste Gruppe von Behältnissen aufweisen, wobei die erste Gruppe von Behältnissen zur jeweiligen Aufnahme einer Flüssigkeit, die eine fluoreszierende Zelle und/oder ein fluoreszierendes Partikel enthält, bestimmt sind. Darüber hinaus kann der Träger eine zweite Gruppe von Behältnissen aufweisen, wobei die zweite Gruppe von Behältnissen zur jeweiligen Aufnahme einer Flüssigkeit, die keine fluoreszierende Zelle und/oder kein fluoreszierendes Partikel enthält, bestimmt sind.

Die Flüssigkeit, die wenigstens eine, insbesondere eine einzige, fluoreszierende Zelle und/oder wenigstens ein, insbesondere eine einziges, fluoreszierendes Partikel enthält, kann vom Dispenser in ein Behältnis der ersten Gruppe eingegeben werden und/oder die Flüssigkeit, die keine fluoreszierende Zelle und/oder kein fluoreszierendes Partikel enthält, kann vom Dispenser in ein Behältnis der zweiten Gruppe, eingegeben werden.

Darüber hinaus kann die auszugebende Flüssigkeit abhängig von dem ersten Messsignal und/oder dem zweiten Messsignal in ein Behältnis des Trägers oder in ein Ausschussbehältnis zugeführt werden. Dabei kann die Flüssigkeit in das Ausschussbehältnis zugeführt werden, wenn in dem Flüssigkeitsbereich nicht die vorgegebene Anzahl an Zellen und/oder Partikeln angeordnet ist. Insbesondere kann die auszugebende Flüssigkeit in das Ausschussbehältnis zugeführt werden, wenn in dem Flüssigkeitsbereich keine Zelle und/oder kein Partikel angeordnet ist und/oder mehr als eine Zelle und/oder mehr als ein Partikel in dem Flüssigkeitsbereich angeordnet ist. Der Flüssigkeitsbereich kann die beim Dispensiervorgang auszugebende Flüssigkeit aufweisen, sodass durch Betrachten des Flüssigkeitsbereichs auf einfache Weise entschieden werden kann, ob die Flüssigkeit in das Behältnis oder das Ausschussbehältnis zugeführt wird.

Bei einer besonderen Ausführung kann der Dispensiervorgang, insbesondere der Ablageort, zusätzlich davon abhängen, ob in einem anderen Flüssigkeitsbereich des Dispensers eine, insbesondere eine einzige, andere Zelle und/oder ein, insbesondere ein einziges, anderes Partikel angeordnet ist und/oder ob eine vorgegebene Anzahl an anderen Zellen und/oder anderen Partikeln in dem anderen Flüssigkeitsbereich angeordnet ist. Alternativ oder zusätzlich kann der Dispensiervorgang, insbesondere der Ablageort, davon abhängen, ob in dem anderen Flüssigkeitsbereich des Dispensers eine, insbesondere eine einzige, andere fluoreszierende Zelle und/oder ein, insbesondere ein einziges, anderes fluoreszierendes Partikel angeordnet ist und/oder ob die vorgegebene Anzahl an anderen fluoreszierenden Zellen und/oder anderen fluoreszierenden Partikeln in dem anderen Flüssigkeitsbereich angeordnet ist. Dabei kann der andere Flüssigkeitsbereich stromaufwärts des Flüssigkeitsbereichs angeordnet sein.

Die Berücksichtigung des anderen Flüssigkeitsbereichs bietet den Vorteil, dass nicht nur die Anzahl und/oder Art der Zellen und/oder Partikel der in einem nächsten Schritt auszugebenden Flüssigkeit bekannt ist, sondern auch die Anzahl und/oder Art der Zellen in einer der Flüssigkeitsausgabe nachfolgenden Flüssigkeitsausgabe. Dies bietet den Vorteil, dass beispielsweise ein Ablegen der Flüssigkeiten in den Träger, insbesondere in das Behältnis des Trägers, effizient erfolgen kann. So kann der Dispenser und/oder der Träger in eine Position verfahren werden, die optimal hinsichtlich der nächsten Flüssigkeitsausgaben ist.

Bei einer besonderen Ausführung kann das erste Messsignal, insbesondere das Hellfeld, zum Erzeugen einer ersten Abbildung, insbesondere einer Hellfeldabbildung, genutzt werden. Das zweite Messsignal, insbesondere das Fluoreszenzlicht, kann zum Erzeugen einer zweiten Abbildung, insbesondere einer Fluoreszenzabbildung, genutzt werden. Die beiden Abbildungen können verglichen werden. Dabei kann durch einen Vergleich der Hellfeldabbildung und der Fluoreszenzabbildung die Lage und/oder die Größe von einer fluoreszierenden Substanz der Zelle und/oder des Partikels auf einfache Weise ermittelt werden. Alternativ oder zusätzlich kann durch einen Vergleich der beiden Abbildungen die Lage der Zelle und/oder des Partikels auf einfache Weise ermittelt werden. Dies ist insbesondere bei Ausführungen von Vorteil, bei denen zunächst ermittelt wird, ob in dem Flüssigkeitsbereich eine fluoreszierende Zelle und/oder ein fluoreszierendes Partikel angeordnet ist.

Nach dem Untersuchen der Flüssigkeit ist bekannt, ob in dem Flüssigkeitsbereich wenigstens eine Zelle, insbesondere mit wenigstens einer bestimmten Eigenschaft, angeordnet ist und/oder wenigstens ein Partikel, insbesondere mit wenigstens einer bestimmten Eigenschaft angeordnet ist. Zudem ist nach dem Untersuchen der Flüssigkeit bekannt, ob in dem Flüssigkeitsbereich die vorgegebene Anzahl an Zellen mit wenigstens einer bestimmten Eigenschaft und/oder Partikeln mit wenigstens einer Eigenschaft angeordnet sind.

Gemäß einem Aspekt der Erfindung ist eine Verwendung einer Vorrichtung zum Ausführen des erfindungsgemäßen Verfahrens, insbesondere zum Ausführen beider erfindungsgemäßer Verfahren, vorgesehen. Die Vorrichtung kann beide Verfahren automatisch durchführen.

Die Vorrichtung weist den Dispenser zum Ausgeben der Flüssigkeit, die wenigstens eine Zelle und/oder ein Partikel enthält, und eine optische Erfassungseinrichtung auf. Der Dispenser kann ein Tropfengenerator sein. Dies bedeutet, dass durch den Dispenser Flüssigkeitstropfen ausgegebene werden können. Darüber hinaus kann durch den Dispenser eine Flüssigkeit, insbesondere ein Flüssigkeitstropfen, ausgegeben werden, die ein Volumen zwischen 10 nl (Nanolitern) bis 50 □l (Mikrolitern) aufweist.

Die optische Erfassungseinrichtung weist eine erste Lichtquelle zum Ausstrahlen des ersten Beleuchtungslichts zum Beleuchten des wenigstens einen Flüssigkeitsbereichs des Dispensers, eine zweite Lichtquelle zum Ausstrahlen des zweiten Beleuchtungslichts zum Beleuchten des wenigstens einen Flüssigkeitsbereichs des Dispensers, wenigstens eine Detektionseinrichtung, wenigstens eine Ausleseeinrichtung und wenigstens eine Auswerteeinrichtung auf.

Die optische Erfassungsvorrichtung kann mehrere Detektionseinrichtungen aufweisen, wobei eine erste Detektionseinrichtung das erste Messsignal und eine zweite Detektionseinrichtung das zweite Messsignal detektiert. Alternativ kann die Vorrichtung eine einzige Detektionseinrichtung aufweisen, die sowohl das erste Messsignal als auch das zweite Messsignal detektiert. Bei dieser Ausführung wird eine besonders kompakt ausgebildete optische Erfassungseinrichtung realisiert.

Die optische Erfassungseinrichtung kann außerdem mehrere Ausleseeinrichtungen aufweisen, wobei eine erste Ausleseeinrichtung das detektierte erste Messsignal ausliest. Eine zweite Ausleseeinrichtung kann das detektierte zweite Messsignal auslesen.

Die Auswerteeinrichtung kann bei einer Betriebsweise der Vorrichtung basierend auf dem ersten Messsignal bestimmen, ob im Flüssigkeitsbereich wenigstens eine, insbesondere eine einzige, Zelle und/oder wenigstens ein, insbesondere ein einziges, Partikel angeordnet ist und/oder ob die vorgegebene Anzahl an Zellen und/oder Partikeln in dem Flüssigkeitsbereich angeordnet ist. Dazu kann die Auswerteeinrichtung basierend auf dem detektierten ersten Messsignal eine optische Eigenschaft der Zelle und/oder des Partikels und/oder der im Flüssigkeitsbereich befindlichen Flüssigkeit bestimmen. Darüber hinaus kann die Auswerteeinrichtung das zweite Messsignal dahingehend auswerten, ob die im Flüssigkeitsbereich angeordnete Zelle und/oder das im Flüssigkeitsbereich angeordnete Partikel fluoresziert oder nicht. Der Dispensiervorgang kann basierend auf dem Auswerteergebnis des zweiten Messsignals gesteuert werden.

Bei einer alternativen Betriebsweise der Vorrichtung kann die Auswerteeinrichtung basierend auf dem zweiten Messsignal bestimmen, ob wenigstens eine Zelle und/oder wenigstens ein Partikel in dem Flüssigkeitsbereich angeordnet ist. Insbesondere kann die Auswerteeinrichtung das zweite Messsignal dahingehend auswerten, ob in dem Teilbereich keine fluoreszierende Zelle und/oder kein fluoreszierendes Partikel angeordnet ist oder ob in dem Flüssigkeitsbereich eine einzige fluoreszierende Zelle und/oder ein einziges fluoreszierendes Partikel angeordnet ist oder ob in dem Flüssigkeitsbereich mehrere fluoreszierende Zellen und/oder mehrere fluoreszierende Partikel angeordnet sind. Darüber hinaus kann die Auswerteeinrichtung das erste Messsignal auswerten, um eine Eigenschaft der Zelle und/oder des Partikels zu bestimmen, wenn wenigstens eine, insbesondere eine einzige, Zelle und/oder wenigstens ein, insbesondere eine einziges, Partikel in dem Flüssigkeitsbereich angeordnet ist. Der Dispensiervorgang kann basierend auf dem Auswerteergebnis, insbesondere der bestimmten Eigenschaft der Zelle und/oder des Partikels gesteuert werden.

Die Vorrichtung kann wenigstens eine, insbesondere genau eine einzige, Abbildungsvorrichtung zum Erzeugen wenigstens einer Abbildung, insbesondere einer Hellfeldabbildung und/oder einer Fluoreszenzabbildung, aufweisen. Alternativ kann die Vorrichtung mehrere Abbildungsvorrichtungen aufweisen, wobei eine erste Abbildungsvorrichtung wenigstens eine erste Abbildung, insbesondere eine Hellfeldabbildung, erzeugt und eine zweite Abbildungsvorrichtung wenigstens eine zweite Abbildung, insbesondere eine Fluoreszenzabbildung, erzeugt.

Bei einer besonderen Ausführung kann die Vorrichtung ein Objektiv aufweisen, das derart angeordnet ist, dass seine optische Achse quer, insbesondere senkrecht, zu einer Ausbringrichtung der Flüssigkeit aus dem Dispenser verläuft. Dadurch ist es möglich, das Objektiv nah an dem Dispenser anzuordnen, was hinsichtlich der Auflösung und der Vergrößerung des Flüssigkeitsbereichs von Vorteil ist.

Die Vorrichtung kann außerdem eine Steuervorrichtung und eine Verfahreinrichtung zum Verfahren des Dispensers und/oder des Trägers aufweisen. Die Steuervorrichtung kann mit der Auswerteeinrichtung elektrisch verbunden sein. Dabei kann die Steuervorrichtung die Verfahreinrichtung basierend auf dem Auswerteergebnis steuern. Insbesondere kann die Steuervorrichtung die Verfahreinrichtung derart steuern, dass die Verfahreinrichtung den Dispenser und/oder den Träger in eine Stellung bewegt, bei der die aus dem Dispenser auszugebende Flüssigkeit in beispielsweise das gewünschte Behältnis des Trägers ausgegeben werden kann. Die Vorrichtung kann dabei den Ablageort der abzugebenden Flüssigkeit automatisch bestimmen.

Die Dispensiervorrichtung kann eine Ablenk- und/oder Absaugeinrichtung aufweisen. Die Ablenkeinrichtung dient zum Ablenken der ausgegebenen Flüssigkeit, insbesondere des ausgegebenen Flüssigkeitstropfens. Die Absaugeinrichtung dient zum Absaugen der ausgegebenen Flüssigkeit. Die ausgegebene Flüssigkeit kann in ein Ausschussbehältnis abgelenkt und/oder abgesaugt werden. Das Ablenken und/oder Absaugen kann erfolgen, bevor die ausgegebene Flüssigkeit in das Behältnis, insbesondere das Behältnis einer Mikrotiterplatte eintritt. Dabei kann die ausgegebene Flüssigkeit abgelenkt und/oder abgesaugt werden, wenn die Flüssigkeit keine Zellen und/oder keine Partikel enthält. Alternativ kann die ausgegebene Flüssigkeit abgelenkt und/oder abgesaugt werden, wenn die Anzahl der in der Flüssigkeit enthaltenen Zellen und/oder Partikel größer oder kleiner als ein vorgegebener Wert, insbesondere größer als 1, ist.

Das erste Beleuchtungslicht und das erste Messsignal können wenigstens teilweise einen gemeinsamen Strahlengang aufweisen. Darüber hinaus können das zweite Beleuchtungslicht und das zweite Messsignal wenigstens teilweise einen gemeinsamen Strahlengang aufweisen. Außerdem können das erste Beleuchtungslicht und das zweite Beleuchtungslicht wenigstens teilweise einen gemeinsamen Strahlengang aufweisen. Dadurch lässt sich eine einfach aufgebaute optische Erfassungseinrichtung realisieren, die wenige Bauelemente aufweist.

In den Figuren ist der Erfindungsgegenstand schematisch dargestellt, wobei gleiche oder gleichwirkende Elemente zumeist mit denselben Bezugszeichen versehen sind. Dabei zeigt:
- Figur 1: eine schematische Darstellung einer Vorrichtung gemäß einer ersten Ausführung, bei der eine erste Lichtquelle ein erstes Beleuchtungslicht ausstrahlt,
- Figur 2: eine schematische Darstellung der Vorrichtung gemäß der ersten Ausführung, bei der eine zweite Lichtquelle ein zweites Beleuchtungslicht ausstrahlt,
- Figur 3: eine schematische Darstellung einer Vorrichtung gemäß einer zweiten Ausführung, bei der die erste Lichtquelle das erste Beleuchtungslicht ausstrahlt,
- Figur 4: eine schematische Darstellung eines erfindungsgemäßen Verfahrens gemäß einer ersten Betriebsweise zu einem Zustand, bei dem keine Zelle und/oder kein Partikel in dem Flüssigkeitsbereich angeordnet ist,
- Figur 5: eine schematische Darstellung des erfindungsgemäßen Verfahrens gemäß der ersten Betriebsweise zu einem Zustand, bei dem eine Zelle und/oder ein Partikel in dem Flüssigkeitsbereich angeordnet ist und
- Figur 6: eine schematische Darstellung eines erfindungsgemäßen Verfahrens gemäß einer zweiten Betriebsweise.

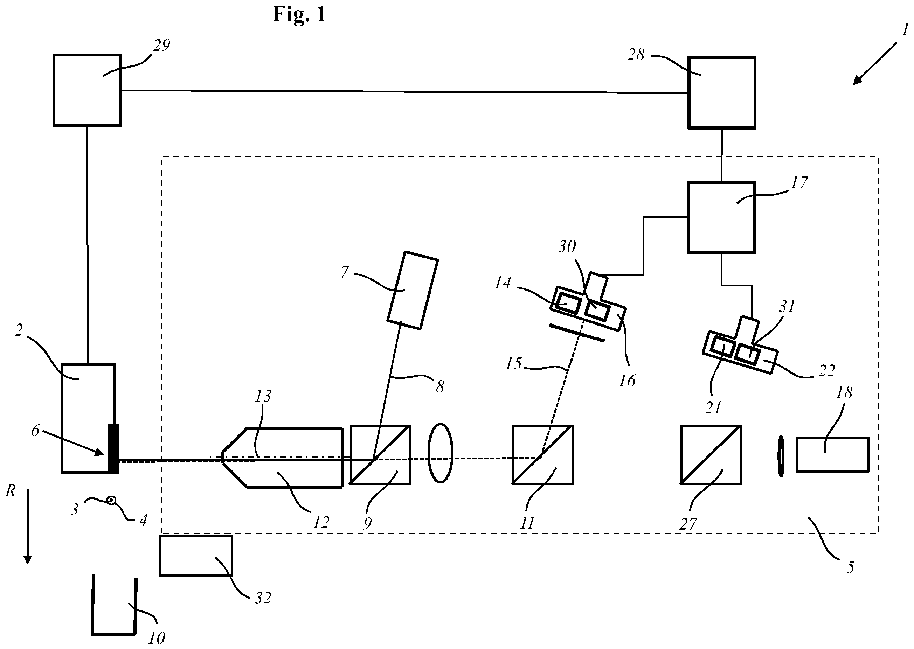

Figur 1 zeigt eine Vorrichtung 1 gemäß einer ersten Ausführung, die einen Dispenser 2 zum Ausgeben einer wenigstens eine Zelle 3 und/oder wenigstens ein Partikel enthaltenen Flüssigkeit 4 und eine optische Erfassungseinrichtung 5 zum optischen Erfassen wenigstens eines in dem Dispenser 2 angeordneten Flüssigkeitsbereichs 6 aufweist. Der Dispenser 2 weist ein in Figur 1 nicht näher dargestelltes Flüssigkeitsreservoir zum Aufnehmen der Flüssigkeit 4 auf. Die optische Erfassungseinrichtung 5 weist eine erste Lichtquelle 7, wie beispielsweise eine LED-Lampe, zum Ausstrahlen eines ersten Beleuchtungslichts 8 auf.

Figur 1 zeigt einen Zustand, bei dem nur die erste Lichtquelle 7 das erste Beleuchtungslicht 8 aussendet. Zusätzlich ist in Figur 1 ein Zustand gezeigt, bei dem der Dispenser 2 eine Flüssigkeit 4, insbesondere einen Flüssigkeitstropfen, ausgegeben hat, der eine Zelle 3 enthält. Die Flüssigkeit 4 wird in ein Behältnis eines Trägers 10 zugeführt. Der Dispenser 2 wird zum Ausgeben der Flüssigkeit 4 durch einen nicht dargestellten Aktor, insbesondere Piezoaktor, betätigt.

Die optische Erfassungseinrichtung 5 weist außerdem ein Objektiv 12 auf. Das Objektiv 12 ist derart angeordnet, dass eine optische Achse 13 des Objektivs 12 senkrecht zu einer Ausgaberichtung R der Flüssigkeit 4 aus dem Dispenser 2 verläuft. Darüber hinaus weist die optische Erfassungseinrichtung 5 einen ersten Filter 9 auf, der im Strahlengang des ersten Beleuchtungslichts 8 zwischen dem Objektiv 12 und der ersten Lichtquelle 7 angeordnet ist.

Der erste Filter 9 ist derart ausgebildet, dass er das erste Beleuchtungslicht 8 in Richtung zum Objektiv 12 umlenkt. Darüber hinaus ist der erste Filter 9 derart ausgebildet, dass er ein von dem Flüssigkeitsbereich 6 ausgehendes erstes Messsignal 15, das aufgrund des ersten Beleuchtungslichts 8 resultiert und in Figur 1 gestrichelt dargestellt ist, durchlässt. Das erste Messsignal 15 kann ein Hellfeldlicht sein. Das von dem ersten Filter 9 durchgelassene elektrische Messsignal 15 wird durch einen zweiten Filter 11 in Richtung zu einer ersten Abbildungsvorrichtung 16 umgelenkt. Die erste Abbildungsvorrichtung 16 kann eine Kamera sein. Das erste Messsignal 15 und das erste Beleuchtungslicht 8 weisen teilweise einen gemeinsamen Strahlengang auf.

Eine in der ersten Abbildungsvorrichtung 16 angeordnete erste Detektionseinrichtung 14 detektiert das erste Messsignal 15. Die erste Abbildungsvorrichtung 16 kann basierend auf dem detektierten ersten Messsignal 15 eine Abbildung des Flüssigkeitsbereichs 6 erzeugen. Darüber hinaus ist eine erste Ausleseeinrichtung 30 in der ersten Abbildungsvorrichtung 16 angeordnet, mittels der das detektierte erste Messsignal 15 ausgelesen werden kann. Insbesondere können die in dem ersten Messsignal 15 enthaltenen Informationen ausgelesen werden.

Die erste Abbildungsvorrichtung 16 ist mit einer Auswerteeinrichtung 17 elektrisch verbunden. Die Auswerteeinrichtung 17 wertet das erste Messsignal 15 und/oder die ausgelesene Information aus. Dabei kann die Auswerteeinrichtung 17 Bestandteil eines nicht dargestellten Rechners sein.

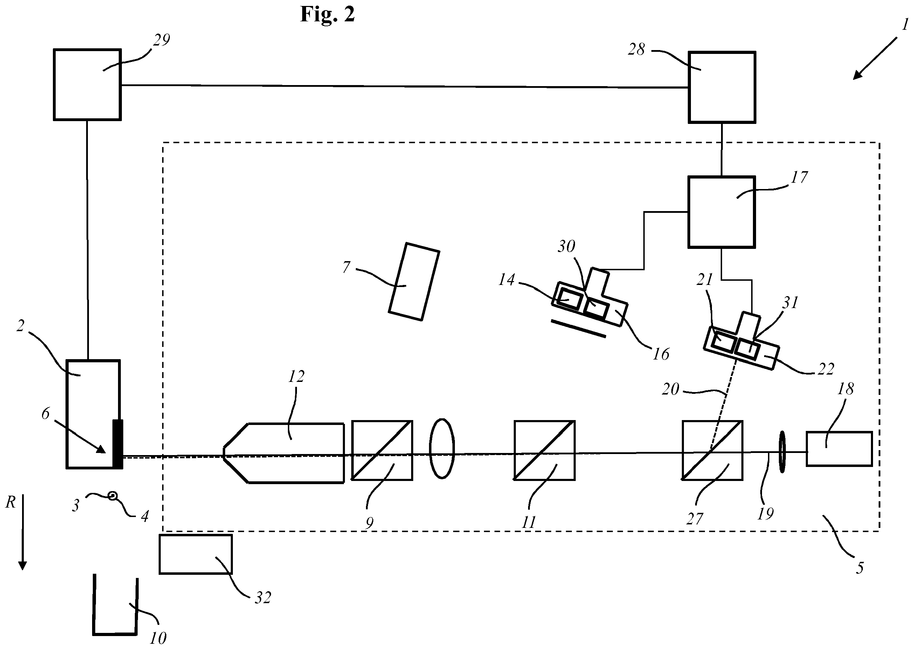

Die optische Erfassungseinrichtung 5 weist außerdem eine zweite Lichtquelle 18 zum Aussenden eines in Figur 2 gezeigten zweiten Beleuchtungslichts 19, eine zweite Abbildungsvorrichtung 22 und eine zweite Detektionseinrichtung 21 zum Detektieren eines in Figur 2 gezeigten zweiten Messsignals 20 auf, die in der zweiten Abbildungsvorrichtung 22 angeordnet ist. Die zweite Lichtquelle 18 kann ein Laser sein und die zweite Abbildungsvorrichtung 22 kann eine Kamera sein.

Darüber hinaus ist in der zweiten Abbildungsvorrichtung 22 eine zweite Ausleseeinrichtung 31 angeordnet, die zum Auslesen des detektierten zweiten Messsignals 20 dient. Insbesondere können mit der zweiten Ausleseeinrichtung 31 die in dem zweiten Messsignal 20 enthaltenen Informationen ausgelesen werden. Die zweite Abbildungsvorrichtung 22 ist mit der Auswerteeinrichtung 17 elektrisch verbunden.

Darüber hinaus weist die optische Erfassungseinrichtung 5 einen Strahlumlenker 27 auf, der, wie in Figur 2 gezeigt ist, das von dem Flüssigkeitsbereich 6 ausgehende zweite Messsignal 20, das gestrichelt dargestellt ist, in Richtung zur zweiten Abbildungsvorrichtung 22 umlenkt.

Die Auswerteeinrichtung 17 ist mit einer Steuervorrichtung 28 verbunden. Die Steuervorrichtung 28 steuert basierend auf dem Auswerteergebnis der Auswerteeinrichtung 17 den Dispensiervorgang des Dispensers 2. Die Steuervorrichtung 28 ist mit einer Verfahreinrichtung 29 elektrisch verbunden. Die Verfahreinrichtung 29 kann den Dispenser 2 und/oder den Träger 10 derart verfahren, dass die Flüssigkeit 4 in den gewünschten Ablageort abgegeben werden kann.

Darüber hinaus kann die Steuervorrichtung 28 eine Ablenk- und/oder Absaugeinrichtung 32 der Dispensiereinrichtung 1 steuern. Dabei kann die Steuervorrichtung 28 die Ablenk- und/oder Absaugeinrichtung 32 derart steuern, dass die ausgegebene Flüssigkeit 4 abgelenkt und/oder abgesaugt wird, wenn in der Flüssigkeit 4 keine Zelle 3 und/oder kein Partikel angeordnet ist oder wenn in der Flüssigkeit 4 mehrere Zellen 3 und/oder mehrere Partikel angeordnet sind.

Figur 2 zeigt einen Zustand der in Figur 1 gezeigten Vorrichtung 1 gemäß der ersten Ausführung, bei dem nur die zweite Lichtquelle 18 den Flüssigkeitsbereich 6 beleuchtet. Die zweite Lichtquelle 18 sendet das zweite Beleuchtungslicht 19 zum Beleuchten des Flüssigkeitsbereichs 6 des Dispensers 2 aus, das durch den Strahlumlenker 27, den zweiten Filter 11 und den ersten Filter 9 zum Objektiv 12 durchgeleitet wird. Dabei weist das zweite Beleuchtungslicht 19 und das erste Beleuchtungslicht 8 einen gemeinsamen Strahlengang auf. Insbesondere wird sowohl das erste Beleuchtungslicht 8 als auch das zweite Beleuchtungslicht 19 durch das Objektiv 12 zum Flüssigkeitsbereich 6 durchgeleitet.

Das von dem Flüssigkeitsbereich 6 infolge des zweiten Beleuchtungslichts 19 ausgehende zweite Messsignal 20 wird durch die zweite Detektionseinrichtung 21 detektiert. Die zweite Ausleseeinrichtung 31 kann das detektierte zweite Messsignal 20 auslesen. Bei dem zweiten Messsignal 20 kann es sich um von der Zelle 3 und/oder von dem Partikel emittiertes Fluoreszenzlicht handeln, sofern eine Zelle 3 und/oder ein Partikel mit Fluoreszenzeigenschaft in dem Flüssigkeitsbereich 6 des Dispensers 2 angeordnet ist. Das zweite Beleuchtungslicht 19 und das zweite Messsignal 20 weisen teilweise einen gemeinsamen Strahlengang auf.

Es ist möglich, dass die Vorrichtung 1 derart betrieben wird, dass die erste Lichtquelle 7 und die zweite Lichtquelle 18 den Flüssigkeitsbereich 6, insbesondere gleichzeitig oder zeitlich versetzt, beleuchten.

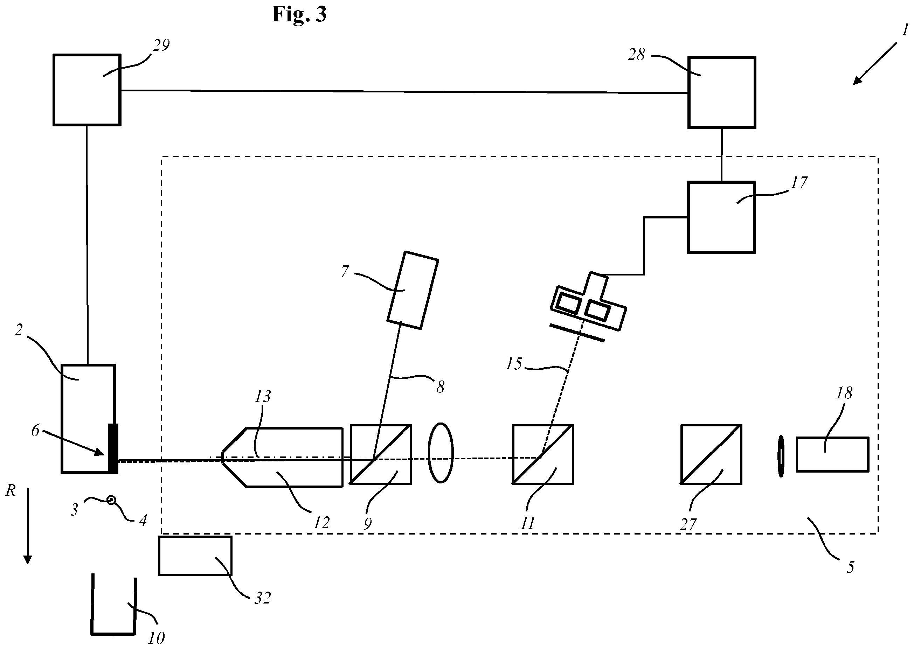

Figur 3 zeigt eine schematische Darstellung einer Vorrichtung gemäß einer zweiten Ausführung, bei der die erste Lichtquelle 7 das erste Beleuchtungslicht 8 ausstrahlt.

Die Vorrichtung unterscheidet sich von der in der in den Figuren 1 und 2 gezeigten Vorrichtung dadurch, dass sie keine zwei Abbildungsvorrichtungen aufweist, sondern eine einzige Abbildungsvorrichtung. Darüber hinaus weist die Vorrichtung 1 nur eine einzige Detektionseinrichtung zum Detektieren des ersten Messsignals 15 und des in Figur 3 nicht dargestellten zweiten Messsignals 20 auf. Außerdem weist die Vorrichtung 1 nur eine einzige Ausleseeinrichtung zum Auslesen des detektierten ersten Messsignals 15 und des detektierten zweiten Messsignals 20 auf. Die Abbildungsvorrichtung ist mit der Auswerteeinrichtung 17 elektrisch verbunden.

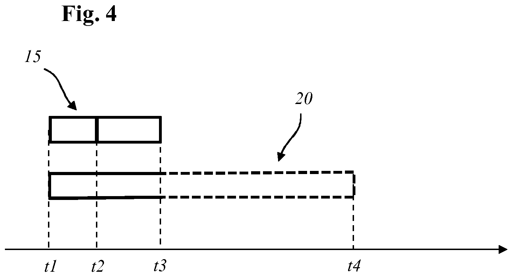

Figur 4 zeigt eine schematische Darstellung des Verfahrens gemäß einer ersten Betriebsweise zu einem Zustand, bei dem keine Zelle und/oder kein Partikel in dem Flüssigkeitsbereich 6 angeordnet ist. Insbesondere sind in Figur 4 eine Auslesezeit des ersten Messsignals 15, eine Auswertezeit des ersten Messsignals 15 und eine Auslesezeit des zweiten Messsignals 20 dargestellt. Das nachfolgend beschriebene Verfahren kann durch die Vorrichtung 1 automatisch durchgeführt werden.

Bei der in Figur 4 dargestellten Betriebsweise wird der Flüssigkeitsbereich 6 sowohl mit dem ersten Beleuchtungslicht 8 als auch dem zweiten Beleuchtungslicht 19 beleuchtet. Die erste Detektionseinrichtung 14 detektiert erstmals zu einem ersten Zeitpunkt t1 das erste Messsignal 15, das beispielsweise ein Hellfeldlicht ist. Das detektierte erste Messsignal 15 wird ausgelesen, wobei der Auslesevorgang zu einem zweiten Zeitpunkt t2 beendet ist.

Die Auswerteeinrichtung 17 wertet das detektierte erste Messsignal 15, insbesondere die aus dem ersten Messsignal 15 ausgelesenen Informationen, aus. Insbesondere wird das erste Messsignal 15 dahingehend ausgewertet, ob in dem Flüssigkeitsbereich 6 eine Zelle 3 und/oder ein Partikel angeordnet ist und/oder ob in dem Flüssigkeitsbereich 6 eine vorgegebene Anzahl an Zellen 3 und/oder Partikeln angeordnet ist. Der Auswertevorgang 17 ist zu einem dritten Zeitpunkt t3 beendet.

Die erste Abbildungsvorrichtung 16 erzeugt basierend auf dem ersten Messsignal 15 eine Abbildung, insbesondere eine Hellfeldabbildung, die durch ein in den Figuren nicht dargestelltes Anzeigegerät angezeigt werden kann. Somit kann der Benutzer der Vorrichtung 1 zeitnah sehen, ob in dem Flüssigkeitsbereich 6 eine Zelle 3 und/oder ein Partikel angeordnet ist.

Die zweite Detektionseinrichtung 21 detektiert erstmals zu dem ersten Zeitpunkt t1 das zweite Messsignal 20, das beispielsweise ein Fluoreszenzlicht ist. Das detektierte zweite Messsignal 20 wird ausgelesen, wobei, wie durch die gestrichelte Linie dargestellt ist, der Auslesevorgang bis zu einem vierten Zeitpunkt t4 dauern würde. Aus Figur 4 ist ersichtlich, dass das allein das Auswerten des zweiten Messsignals 20 länger dauern würde als das Auslesen und Auswerten des ersten Messsignals 15.

Da in dem in Figur 4 dargestellten Fall in dem Flüssigkeitsbereich 6 keine Zelle 3 und/oder kein Partikel angeordnet ist, veranlasst die Steuervorrichtung 28, dass das Auslesen des zweiten Messsignals 20 zum dritten Zeitpunkt t3 abgebrochen wird. Gleichermaßen würde der Auslesevorgang zum dritten Zeitpunkt t3 abgebrochen werden, wenn in dem Flüssigkeitsbereich 6 nicht die vorgegebene Anzahl an Zellen 3 und/oder Partikeln angeordnet wäre.

Der zuvor beschriebene Detektions-, Auslese- und Auswertevorgang des ersten und zweiten Messsignals 15, 20 kann nach einer vorgegebenen Zeitdauer und/oder nach einer Flüssigkeitsausgabe, insbesondere einer Ausgabe des Flüssigkeitsbereichs 6, aus dem Dispenser 2 wiederholt werden, was in Figur 4 nicht dargestellt ist.

Die Steuervorrichtung 28 steuert den Dispensiervorgang basierend auf dem ersten und/oder zweiten Messsignal 15, 20. So kann die Steuervorrichtung 28 veranlassen, dass die Verfahreinrichtung 29 den Dispenser 2 und/oder den Träger 10 in eine Stellung verfährt, in der die auszugebende Flüssigkeit in ein Ausschussbehältnis ausgegeben wird. Alternativ oder zusätzlich kann die Steuervorrichtung 28 die Ablenk- und/oder Absaugeinrichtung 32 derart steuern, dass die ausgegebene Flüssigkeit 4 in ein Ausschussbehältnis abgelenkt und/oder abgesaugt wird. Das Ausschussbehältnis ist dazu bestimmt, Flüssigkeit aufzunehmen, die keine Zellen und/oder Partikel enthält und/oder die nicht die vorgegebene Anzahl an Zellen und/oder Partikeln enthält. Nach Verfahren des Dispensers und/oder des Trägers 10 in die gewünschte Stellung wird die Flüssigkeit 4 aus dem Dispenser 2 in das Behältnis des Trägers 10 ausgegeben.

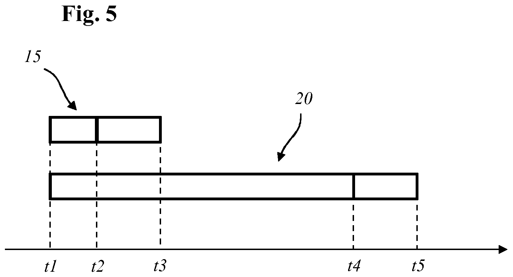

Figur 5 zeigt eine schematische Darstellung des erfindungsgemäßen Verfahrens gemäß einer ersten Betriebsweise zu einem Zustand, bei dem eine Zelle 3 und/oder ein Partikel in dem Flüssigkeitsbereich 6 angeordnet ist und/oder eine vorgegebene Anzahl an Zellen 3 und/oder Partikeln in dem Flüssigkeitsbereich 6 angeordnet sind. Der Verfahrensablauf entspricht bis zum dritten Zeitpunkt t3 dem in Figur 4 gezeigten Verfahrensablauf.

Ein Unterschied zu dem in Figur 4 gezeigten Verfahrensablauf besteht darin, dass zum dritten Zeitpunkt t4 die Auswerteeinrichtung 17 bestimmt, dass eine Zelle 3 und/oder ein Partikel im Flüssigkeitsbereich 6 angeordnet ist und/oder die in dem Flüssigkeitsbereich 6 angeordnete Anzahl an Zellen und/oder Partikeln der vorgegebenen Anzahl an Zellen und/oder Partikeln entspricht. Daher wird das zweite Messsignal 20 vollständig ausgelesen, wobei das Auslesen zu dem vierten Zeitpunkt t4 vollendet ist.

Die Auswerteeinrichtung 17 wertet ab dem vierten Zeitpunkt t4 das zweite Messsignal 20, insbesondere die ausgelesenen Informationen, aus, wobei die Auswertung zu einem fünften Zeitpunkt t5 beendet ist. Insbesondere wertet die Auswerteinrichtung 17 das detektierte zweite Messsignal 20 dahingehend aus, ob die in dem Flüssigkeitsbereich 6 angeordnete Zelle 3 und/oder das Partikel eine bestimmte Eigenschaft aufweist, insbesondere ob die Zelle und/oder das Partikel fluoresziert. Die zweite Abbildungsvorrichtung 22 erzeugt basierend auf dem zweiten Messsignal 20 eine Abbildung, insbesondere eine Fluoreszenzabbildung, die durch das Anzeigegerät angezeigt werden kann.

Die Steuervorrichtung 28 steuert den Dispensiervorgang basierend auf dem ersten und/oder zweiten Messsignal 15, 20. So kann der Dispenser 2 und/oder der Träger 10 abhängig von einem Steuerbefehl der Steuervorrichtung 28 durch die Verfahreinrichtung 29 in eine Stellung verfahren werden, in der eine fluoreszierende Zelle und/oder ein fluoreszierendes Partikel in ein bestimmtes Behältnis des Trägers 10 eingebracht werden kann. Nach Verfahren des Dispensers 2 und/oder des Trägers 10 in die gewünschte Stellung wird die Flüssigkeit 4 von dem Dispenser 2 in das Behältnis des Trägers 10 ausgegeben.

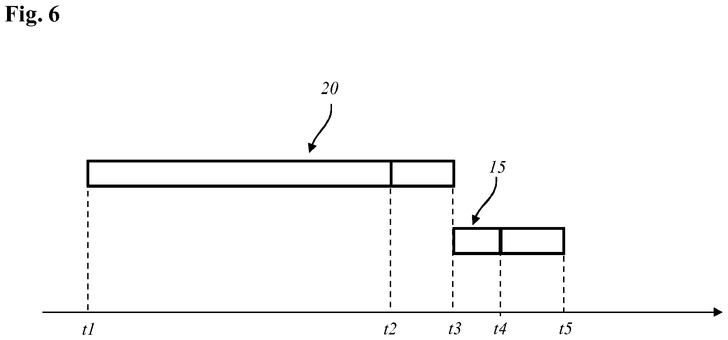

Nachfolgend wird anhand von Figur 6 ein Verfahren gemäß einer zweiten Betriebsweise beschrieben. Das Verfahren kann durch die Vorrichtung 1 automatisch ausgeführt werden.

Bei dem Verfahren wird zuerst, wie in Figur 2 gezeigt ist, der Flüssigkeitsbereich 6 mit dem zweiten Beleuchtungslicht 19 beleuchtet und das daraufhin von dem Flüssigkeitsbereich 6 ausgehende zweite Messsignal 20 erstmals zum ersten Zeitpunkt t1 detektiert. Das Auslesen des detektierten ersten Messsignals 20 endet zu einem zweiten Zeitpunkt t2.

Anschließend wertet die Auswerteeinrichtung 17 das detektierte zweite Messsignal 20, insbesondere die ausgelesenen Informationen, aus. Insbesondere wird das detektierte zweite Messsignal 20 dahingehend ausgewertet, ob im Flüssigkeitsbereich 6 wenigstens eine, insbesondere eine einzige, fluoreszierende Zelle 3 und/oder wenigstens ein, insbesondere ein einziges, fluoreszierendes Partikel angeordnet ist und/oder ob in dem Flüssigkeitsbereich 6 eine vorgegebene Anzahl an fluoreszierenden Zellen und/oder fluoreszierenden Partikeln angeordnet ist. Die Auswertung ist zu einem dritten Zeitpunkt t3 beendet. Die zweite Abbildungsvorrichtung 22 erzeugt basierend auf dem zweiten Messsignal 20 eine Fluoreszenzabbildung, die durch das Anzeigegerät dargestellt werden kann.

Sofern keine fluoreszierende Zelle 3 und/oder kein fluoreszierendes Partikel in dem Flüssigkeitsbereich 6 angeordnet ist und/oder die in dem Flüssigkeitsbereich 6 enthaltene Anzahl an Zellen und/oder Partikeln nicht der vorgegebenen Anzahl entspricht, wird der Vorgang zum Untersuchen der Flüssigkeit zum dritten Zeitpunkt t3 beendet. Der zuvor beschriebene Detektions-, Auslese und Auswertevorgang des zweiten Messsignals 20 kann nach einer vorgegebenen Zeitdauer und/oder nach einer Flüssigkeitsausgabe, insbesondere nach einer Ausgabe des Flüssigkeitsbereichs 6, wiederholt werden, was in Figur 6 nicht dargestellt ist.

In Figur 6 ist der Fall dargestellt, bei dem eine Zelle 3 und/oder ein Partikel in dem Flüssigkeitsbereich 6 angeordnet ist und/oder bei dem die in dem Flüssigkeitsbereich 6 angeordnete Anzahl an Zellen 3 und/oder Partikeln der vorgegebenen Anzahl an Zellen und/oder Partikeln entspricht. Somit hat die Auswerteeinrichtung 17 zum dritten Zeitpunkt t3 die Lage der Zelle 3 und/oder des Partikels in dem Flüssigkeitsbereich 6 ermittelt.

Zum dritten Zeitpunkt t3 wird das erste Messsignal 15 erstmals detektiert, wobei das Auslesen des detektierten ersten Messsignals 15 zum vierten Zeitpunkt t4 vollendet ist. Anschließend wird das detektierte erste Messsignal 15, insbesondere die ausgelesenen Informationen, durch die Auswerteeinrichtung 17 ausgewertet, was zu einem fünften Zeitpunkt t5 abgeschlossen ist. Der Auswertevorgang ist kurz, weil die Lage der Zelle und/oder des Partikels und daher der auszuwertende Bereich bekannt ist.

Die Auswerteeinrichtung 17 bestimmt eine Eigenschaft der Zelle und/oder des Partikels, wie beispielsweise die Größe, Rundheit der Zelle und/des Partikels, etc.. Darüber hinaus kann mittels der ersten Abbildungsvorrichtung 16 basierend auf dem detektierten ersten Messsignal 15 eine Hellfeldabbildung erzeugt und durch das Anzeigegerät angezeigt werden.

Der Ablageort der auszugebenden Flüssigkeit 4 kann basierend auf der Eigenschaft der Zelle 3 und/oder des Partikels bestimmt werden. Die Verfahreinrichtung 29 kann den Dispenser 2 und/oder den Träger 10 in eine entsprechende Stellung verfahren, sodass die Flüssigkeit 4 in den bestimmten Ablageort ausgegeben werden kann.

### Bezugszeichenliste:

- 1: Vorrichtung
- 2: Dispenser
- 3: Zelle
- 4: Flüssigkeit
- 5: optische Erfassungseinrichtung
- 6: Flüssigkeitsbereich
- 7: erste Lichtquelle
- 8: erstes Beleuchtungslicht
- 9: erster Filter
- 10: Träger
- 11: zweiter Filter
- 12: Objektiv
- 13: optische Achse
- 14: erste Detektionseinrichtung
- 15: erstes Messsignal
- 16: erste Abbildungsvorrichtung
- 17: Auswerteeinrichtung
- 18: zweite Lichtquelle
- 19: zweites Beleuchtungslicht
- 20: zweites Messsignal
- 21: zweite Detektionsreinrichtung
- 22: zweite Abbildungsvorrichtung
- 27: Strahlumlenker
- 28: Steuervorrichtung
- 29: Verfahreinrichtung
- 30: erste Ausleseeinrichtung
- 31: zweite Ausleseeinrichtung
- 32: Ablenk- und/oder Absaugeinrichtung

- R: Ausgaberichtung
- t1-t5: erster bis fünfter Zeitpunkt

## Patentansprüche

1. Verfahren zum automatischen Untersuchen einer Flüssigkeit (4), die wenigstens eine Zelle (3) und/oder wenigstens ein Partikel enthält und in einem Dispenser angeordnet ist und durch den Dispenser ausgebbar ist, mittels eines von einem Flüssigkeitsbereich (6) ausgehenden ersten und zweiten Messsignals (15, 20), wobei das Verfahren folgende Schritte aufweist:
a. Auslesen des ersten Messsignals (15) und Auswerten des ersten Messsignals (15) und
b. Bestimmen anhand des ausgewerteten ersten Messsignals (15), ob eine Detektion des zweiten Messsignals (20) durchgeführt und ein Auslesen des detektierten zweiten Messsignals vollendet wird oder ob ein Auslesen des detektierten zweiten Messsignals (20) vollendet wird oder ob ein Auslesen des detektierten zweiten Messsignals (20) abgebrochen wird,
wobei das erste Messsignal (15) dahingehend ausgewertet wird, ob in dem Flüssigkeitsbereich (6) wenigstens eine Zelle (3) und/oder wenigstens ein Partikel angeordnet ist und wobei das zweite Messsignal (20) detektiert und ausgelesen wird und/oder das Auslesen des zweiten Messsignals (20) vollständig durchgeführt wird, wenn in dem Flüssigkeitsbereich (6) wenigstens eine Zelle (3) und/oder wenigstens ein Partikel angeordnet ist.

2. Verfahren nach Anspruch 1, **dadurch gekennzeichnet, dass**
a. das zweite Messsignal (20) nicht detektiert und ausgelesen wird, wenn in dem Flüssigkeitsbereich (6) keine Zelle (3) und/oder kein Partikel angeordnet ist und/oder wenn in dem Flüssigkeitsbereich (6) nicht die vorgegebene Anzahl von Zellen und/oder Partikeln angeordnet ist und/oder dass
b. das Auslesen des zweiten Messsignals (20) abgebrochen wird, wenn in dem Flüssigkeitsbereich (6) keine Zelle (3) und/oder kein Partikel angeordnet ist und/oder wenn in dem Flüssigkeitsbereich nicht die vorgegebene Anzahl von Zellen und/oder Partikeln angeordnet ist.

3. Verfahren nach Anspruch 1 oder 2, **dadurch gekennzeichnet, dass**
a. das zweite Messsignal (20) detektiert und ausgelesen wird, wenn in dem Flüssigkeitsbereich (6) die vorgegebene Anzahl an Zellen (3) und/oder Partikeln angeordnet ist und/oder dass
b. das Auslesen des zweiten Messsignals (20) vollständig durchgeführt wird, wenn in dem Flüssigkeitsbereich (6) die vorgegebene Anzahl an Zellen (3) und/oder Partikeln angeordnet ist.

4. Verfahren nach einem der Ansprüche 1 bis 3, **dadurch gekennzeichnet, dass** das Auslesen des zweiten Messsignals (20) länger dauert als das Auslesen des ersten Messsignals (15).

5. Verfahren nach einem der Ansprüche 1 bis 4, **dadurch gekennzeichnet, dass** der Flüssigkeitsbereich (6) mit einem zweiten Beleuchtungslicht (19) beleuchtet wird und daraufhin das zweite Messsignal (20) von dem Flüssigkeitsbereich (6) ausgeht, wobei das zweite Beleuchtungslicht (19) nur dann ausgestrahlt wird, wenn eine Zelle (3) und/oder ein Partikel in dem Flüssigkeitsbereich (6) angeordnet ist und/oder wenn in dem Flüssigkeitsbereich (6) die vorgegebene Anzahl von Zellen und/oder Partikeln angeordnet ist.

6. Verfahren zum automatischen Untersuchen einer Flüssigkeit (4), die wenigstens eine Zelle (3) und/oder wenigstens ein Partikel enthält und in einem Dispenser angeordnet ist und durch einen Dispenser ausgebbar ist, mittels eines von einem Flüssigkeitsbereich (6) ausgehenden ersten und zweiten Messsignals (15, 20), wobei
a. das zweite Messsignal (20) ausgelesen und ausgewertet wird, um zu ermitteln, ob wenigstens eine Zelle (3) und/oder wenigstens ein Partikel in dem Flüssigkeitsbereich (6) angeordnet ist, und
b. das erste Messsignal (15) ausgelesen und ausgewertet wird, um eine Eigenschaft der Zelle (3) und/oder des Partikels zu bestimmen, wenn eine Zelle (3) und/oder ein Partikel in dem Flüssigkeitsbereich (6) angeordnet ist, wobei das Auslesen des zweiten Messsignals (20) länger dauert als das Auslesen des ersten Messsignals (15) und/oder das Auswerten des zweiten Messsignals (20) länger dauert als das Auswerten des ersten Messsignals (15).

7. Verfahren nach Anspruch 6, **dadurch gekennzeichnet, dass** das zweite Messsignal (20) dahingehend ausgewertet wird, ob eine vorgegebene Anzahl von fluoreszierenden Zellen (3) und/oder Partikeln in dem Flüssigkeitsbereich (6) angeordnet ist.

8. Verfahren nach Anspruch 6 oder 7, **dadurch gekennzeichnet, dass**
a. der Flüssigkeitsbereich (6) mit einem ersten Beleuchtungslicht (8) beleuchtet wird und daraufhin das erste Messsignal (15) von dem Flüssigkeitsbereich (6) ausgeht und/oder dass
b. der Flüssigkeitsbereich (6) mit einem zweiten Beleuchtungslicht (19) beleuchtet wird und daraufhin das zweite Messsignal (20) von dem Flüssigkeitsbereich (6) ausgeht.

9. Verfahren nach Anspruch 8, **dadurch gekennzeichnet, dass**
a. das erste Beleuchtungslicht (8) ausgestrahlt wird, nachdem ermittelt wurde, dass eine fluoreszierende Zelle (3) und/oder ein fluoreszierendes Partikel in dem Flüssigkeitsbereich (6) angeordnet ist und/oder nachdem ermittelt wurde, dass die vorgegebene Anzahl an fluoreszierenden Zellen (3) und/oder fluoreszierenden Partikeln in dem Flüssigkeitsbereich angeordnet ist oder dass
b. das erste Beleuchtungslicht ausgestrahlt wird, während ermittelt wird, ob eine fluoreszierende Zelle (3) und/oder ein fluoreszierendes Partikel in dem Flüssigkeitsbereich (6) angeordnet ist und/oder während ermittelt wird, ob die vorgegebene Anzahl an fluoreszierenden Zellen (3) und/oder fluoreszierenden Partikeln in dem Flüssigkeitsbereich angeordnet ist.

10. Verfahren nach einem der Ansprüche 1 bis 9, **dadurch gekennzeichnet, dass** abhängig von dem ersten Messsignal und/oder dem zweiten Messsignal, die auszugebende Flüssigkeit in ein Behältnis des Trägers (10) oder in ein Ausschussbehältnis zugeführt wird.

11. Verfahren nach einem der Ansprüche 1 bis 10, **dadurch gekennzeichnet, dass** das erste Messsignal (15) und das zweite Messsignal (20) aufgrund unterschiedlicher Messverfahren resultieren.

12. Verfahren nach Anspruch 11, **dadurch gekennzeichnet, dass** die Hellfeldabbildung und die Fluoreszenzabbildung miteinander verglichen werden, um die Lage der Zelle und/oder des Partikels zu ermitteln.

13. Verwendung einer Vorrichtung (1) zum Ausführen des Verfahrens nach einem der Ansprüche 1 bis 12, **dadurch gekennzeichnet, dass** die Vorrichtung (1) den Dispenser (2) zum Ausgeben der Flüssigkeit (4), die wenigstens eine Zelle (3) und/oder ein Partikel enthält, und eine optische Erfassungseinrichtung (5) aufweist, die eine erste Lichtquelle (7) zum Ausstrahlen des ersten Beleuchtungslichts (8) zum Beleuchten des wenigstens einen Flüssigkeitsbereichs (6) des Dispensers (2), eine zweite Lichtquelle (18) zum Ausstrahlen des zweiten Beleuchtungslichts (19) zum Beleuchten des wenigstens einen Flüssigkeitsbereichs (6) des Dispensers (2), wenigstens eine Detektionseinrichtung, wenigstens eine Ausleseeinrichtung und wenigstens eine Auswerteeinrichtung (17) aufweist.

14. Verwendung nach Anspruch 13, **dadurch gekennzeichnet, dass** die Auswerteeinrichtung (17) basierend auf dem ersten Messsignal (15) bestimmt, ob wenigstens eine Zelle und/oder ein Partikel in dem Flüssigkeitsbereich (6) angeordnet ist und/oder ob eine vorgegebene Anzahl an Zellen und/oder Partikeln in dem Flüssigkeitsbereich (6) angeordnet ist.

15. Verwendung nach Anspruch 13 oder 14, **dadurch gekennzeichnet, dass**
a. das erste Beleuchtungslicht (8) und das erste Messsignal (15) wenigstens teilweise einen gemeinsamen Strahlengang aufweisen und/oder dass
b. das zweite Beleuchtungslicht (19) und das zweite Messsignal (20) wenigstens teilweise einen gemeinsamen Strahlengang aufweisen.

## Claims

1. A method for automatically examining a liquid (4) which comprises at least one cell (3) and/or at least one particle and is arranged in a dispenser and can be dispensed through the dispenser, using a first and a second measurement signal (15, 20) emanating from a liquid region (6), wherein the method comprises the following steps:
a. reading the first measurement signal (15) and analysing the first measurement signal (15), and
b. determining on the basis of the analysed first measurement signal (15) whether a detection of the second measurement signal (20) is carried out and a readout of the detected second measurement signal is completed, or whether a readout of the detected second measurement signal (20) is completed, or whether a readout of the detected second measurement signal (20) is cancelled,
wherein the first measurement signal (15) is analysed to determine whether at least one cell (3) and/or at least one particle is located in the liquid region (6), and wherein the second measurement signal (20) is detected and read out and/or the readout of the second measurement signal (20) is carried out completely, if at least one cell (3) and/or at least one particle is located in the liquid region (6).

2. The method according to claim 1, **characterised in that**
a. the second measurement signal (20) is not detected and read out if no cells (3) and/or no particles are located in the liquid region (6) and/or if the predetermined number of cells and/or particles is not located in the liquid region (6) and/or **in that**
b. the readout of the second measurement signal (20) is cancelled if no cell (3) and/or no particle is located in the liquid region (6) and/or if the predetermined number of cells and/or particles is not located in the liquid region.

3. The method according to claim 1 or 2, **characterised in that**
a. the second measurement signal (20) is detected and read out if the predetermined number of cells (3) and/or particles is located in the liquid region (6) and/or **in that**
b. the readout of the second measurement signal (20) is completed if the predetermined number of cells (3) and/or particles is located in the liquid region (6).

4. The method according to one of claims 1 to 3, **characterised in that** the readout of the second measurement signal (20) takes longer than the readout of the first measurement signal (15).

5. The method according to one of claims 1 to 4, **characterised in that** the liquid region (6) is illuminated with a second illuminating light (19) and the second measurement signal (20) then emanates from the liquid region (6), wherein the second illuminating light (19) is only emitted if a cell (3) and/or a particle is located in the liquid region (6) and/or if the predetermined number of cells and/or particles is located in the liquid region (6).

6. A method for automatically examining a liquid (4) which comprises at least one cell (3) and/or at least one particle and is arranged in a dispenser and can be dispensed through a dispenser, using a first and a second measurement signal (15, 20) emanating from a liquid region (6), wherein
a. the second measurement signal (20) is read out and analysed in order to determine whether at least one cell (3) and/or at least one particle is located in the liquid region (6), and
b. the first measurement signal (15) is read out and analysed in order to determine a property of the cell (3) and/or the particle if a cell (3) and/or a particle is located in the liquid region (6), wherein the readout of the second measurement signal (20) takes longer than the readout of the first measurement signal (15) and/or the evaluation of the second measurement signal (20) takes longer than the evaluation of the first measurement signal (15).

7. The method according to claim 6, **characterised in that**
the second measurement signal (20) is analysed to determine whether a predetermined number of fluorescent cells (3) and/or particles is located in the liquid region (6).

8. The method according to claim 6 or 7, **characterised in that**
a. the liquid region (6) is illuminated with a first illuminating light (8), and the first measurement signal (15) then emanates from the liquid region (6) and/or **in that**
b. the liquid region (6) is illuminated with a second illuminating light (19), and the second measurement signal (20) then emanates from the liquid region (6).

9. The method according to claim 8, **characterised in that**
a. the first illuminating light (8) is emitted after it has been determined that a fluorescent cell (3) and/or a fluorescent particle is located in the liquid region (6) and/or after it has been determined that the predetermined number of fluorescent cells (3) and/or fluorescent particles is located in the liquid region and/or **in that**
b. the first illuminating light is emitted while determining whether a fluorescent cell (3) and/or a fluorescent particle is located in the liquid region (6) and/or while determining whether the predetermined number of fluorescent cells (3) and/or fluorescent particles is located in the liquid region.

10. The method according to one of claims 1 to 9, **characterised in that**, depending on the first measurement signal and/or the second measurement signal, the liquid to be dispensed is fed into a container of the carrier (10) or into a reject container.

11. The method according to one of claims 1 to 10, **characterised in that** the first measurement signal (15) and the second measurement signal (20) result from different measurement methods.

12. The method according to claim 11, **characterised in that** the bright field image and the fluorescence image are compared with each other in order to determine the position of the cell and/or the particle.

13. A use of a device (1) for carrying out the method according to one of claims 1 to 12, **characterised in that** the device (1) has the dispenser (2) for dispensing the liquid (4), which contains at least one cell (3) and/or one particle, and an optical detection device (5), which has a first light source (7) for radiating the first illuminating light (8) for illuminating the at least one liquid region (6) of the dispenser (2), a second liquid region (18) for radiating the second illuminating light (19) for illuminating the at least one liquid region (6) of the dispenser (2), at least one detection device, at least one readout device and at least one analysis device (17).

14. The use according to claim 13, **characterised in that** the analysis device (17) determines on the basis of the first measurement signal (15) whether at least one cell and/or a particle is located in the liquid region (6) and/or whether a predetermined number of cells and/or particles is located in the liquid region (6).

15. The use according to claim 13 or 14, **characterised in that**
a. the first illuminating light (8) and the first measurement signal (15) have a common beam path at least in parts and/or **in that**
b. the second illuminating light (19) and the second measurement signal (20) have a common beam path at least in parts.

## Revendications

1. Procédé d'analyse automatique d'un liquide (4), lequel contient au moins une cellule (3) et/ou au moins une particule et lequel est disposé dans un distributeur et peut être distribué à l'aide du distributeur, au moyen d'un premier et d'un second signal de mesure (15, 20) émis à partir d'une zone liquide (6), le procédé comprenant les étapes suivantes :
a. la lecture du premier signal de mesure (15) et l'évaluation du premier signal de mesure (15) et
b. la détermination, en fonction du premier signal de mesure (15) évalué, si une détection du second signal de mesure (20) est effectuée et une lecture du second signal de mesure détecté est terminée ou si une lecture du second signal de mesure (20) détecté est terminée ou si une lecture du second signal de mesure (20) détecté est interrompue,
dans lequel le premier signal de mesure (15) est évalué pour savoir si au moins une cellule (3) et/ou au moins une particule sont disposées dans la zone liquide (6) et dans lequel le second signal de mesure (20) est détecté et lu et/ou la lecture du second signal de mesure (20) est effectuée complètement lorsqu'au moins une cellule (3) et/ou au moins une particule est disposée dans la zone liquide (6).

2. Procédé selon la revendication 1, **caractérisé en ce que**
a. le second signal de mesure (20) n'est pas détecté et lu lorsqu'aucune cellule (3) et/ou aucune particule n'est disposée dans la zone liquide (6) et/ou lorsque le nombre prédéterminé de cellules et/ou de particules n'est pas disposé dans la zone liquide (6) et/ou **en ce que**
b. la lecture du second signal de mesure (20) est interrompue lorsqu'aucune cellule (3) et/ou aucune particule n'est disposée dans la zone liquide (6) et/ou lorsque le nombre prédéterminé de cellules et/ou de particules n'est pas disposé dans la zone liquide.

3. Procédé selon la revendication 1 ou 2, **caractérisé en ce que**
a. le second signal de mesure (20) est détecté et lu lorsque le nombre prédéterminé de cellules (3) et/ou de particules est disposé dans la zone liquide (6) et/ou **en ce que**
b. la lecture du second signal de mesure (20) est effectuée complètement lorsque le nombre prédéterminé de cellules (3) et/ou de particules est disposé dans la zone liquide (6).

4. Procédé selon l'une quelconque des revendications 1 à 3, **caractérisé en ce que** la durée de la lecture du second signal de mesure (20) est supérieure à la durée de la lecture du premier signal de mesure (15).

5. Procédé selon l'une quelconque des revendications 1 à 4, **caractérisé en ce que** la zone liquide (6) est éclairée à l'aide d'une seconde lumière d'éclairage (19) et par conséquent le second signal de mesure (20) provient de la zone liquide (6), dans lequel la seconde lumière d'éclairage (19) n'est émise que lorsqu'une cellule (3) et/ou une particule sont disposées dans la zone liquide (6) et/ou lorsque le nombre prédéterminé de cellules et/ou de particules est disposé dans la zone liquide (6).

6. Procédé d'analyse automatique d'un liquide (4), lequel contient au moins une cellule (3) et/ou au moins une particule et lequel est disposé dans un distributeur et peut être distribué à l'aide du distributeur, au moyen d'un premier et d'un second signal de mesure (15, 20) émis à partir d'une zone liquide (6), dans lequel
a. le second signal de mesure (20) est lu et évalué pour déterminer si au moins une cellule (3) et/ou au moins une particule sont disposées dans la zone liquide (6), et
b. le premier signal de mesure (15) est lu et évalué pour déterminer une propriété de la cellule (3) et/ou de la particule lorsqu'une cellule (3) et/ou une particule sont disposées dans la zone liquide (6), dans lequel la durée de la lecture du second signal de mesure (20) est supérieure à la durée de la lecture du premier signal de mesure (15) et/ou la durée de l'évaluation du second signal de mesure (20) est supérieure à la durée de l'évaluation du premier signal de mesure (15).

7. Procédé selon la revendication 6, **caractérisé en ce que**
le second signal de mesure (20) est évalué pour savoir si un nombre prédéterminé de cellules (3) fluorescentes et/ou de particules est disposé dans la zone liquide (6).

8. Procédé selon la revendication 6 ou 7, **caractérisé en ce que**
a. la zone liquide (6) est éclairée à l'aide d'une première lumière d'éclairage (8) et par conséquent le premier signal de mesure (15) provient de la zone liquide (6) et/ou **en ce que**
b. la zone liquide (6) est éclairée à l'aide de la seconde lumière d'éclairage (19) et par conséquent le second signal de mesure (20) provient de la zone liquide (6).

9. Procédé selon la revendication 8, **caractérisé en ce que**
a. la première lumière d'éclairage (8) est émise après qu'il a été déterminé qu'une cellule (3) fluorescente et/ou une particule fluorescente sont disposées dans la zone liquide (6) et/ou après qu'il a été déterminé que le nombre prédéterminé de cellules (3) fluorescentes et/ou de particules fluorescentes est disposé dans la zone liquide ou **en ce que**
b. la première lumière d'éclairage est émise lorsqu'il a été déterminé si une cellule (3) fluorescente et/ou une particule fluorescente sont disposées dans la zone liquide (6) et/ou lorsqu'il a été déterminé si le nombre prédéterminé de cellules (3) fluorescentes et/ou de particules fluorescentes est disposé dans la zone liquide.

10. Procédé selon l'une quelconque des revendications 1 à 9, **caractérisé en ce que**, en fonction du premier signal de mesure et/ou du second signal de mesure, le liquide à distribuer est introduit dans un récipient du support (10) ou dans un récipient d'élimination.

11. Procédé selon l'une quelconque des revendications 1 à 10, **caractérisé en ce que** le premier signal de mesure (15) et le second signal de mesure (20) résultent de différents procédés de mesure.

12. Procédé selon la revendication 11, **caractérisé en ce que** l'image en champ clair et l'image en fluorescence sont comparées l'une avec l'autre pour déterminer la position de la cellule et/ou de la particule.

13. Utilisation d'un dispositif (1) permettant de mettre en oeuvre le procédé selon l'une quelconque des revendications 1 à 12, **caractérisée en ce que** le dispositif (1) comporte le distributeur (2) permettant de distribuer le liquide (4), lequel comprend au moins une cellule (3) et/ou une particule, et comporte un dispositif de détection (5) optique, lequel comprend une première source de lumière (7) pour émettre la première lumière d'éclairage (8) pour éclairer l'au moins une zone liquide (6) du distributeur (2), une seconde source de lumière (18) pour émettre la seconde lumière d'éclairage (19) pour éclairer l'au moins une zone liquide (6) du distributeur (2), au moins un dispositif de détection, au moins un dispositif de lecture et au moins un dispositif d'évaluation (17).

14. Utilisation selon la revendication 13, **caractérisée en ce que** le dispositif d'évaluation (17) détermine, en fonction du premier signal de mesure (15), si l'au moins une cellule et/ou une particule sont disposées dans la zone liquide (6) et/ou si un nombre prédéterminé de cellules et/ou de particules est disposé dans la zone liquide (6).

15. Utilisation selon la revendication 13 ou 14, **caractérisée en ce que**
a. la première lumière d'éclairage (8) et le premier signal de mesure (15) comprennent au moins partiellement un trajet de faisceau commun et/ou **en ce que**
b. la seconde lumière d'éclairage (19) et le second signal de mesure (20) comprennent au moins partiellement un trajet de faisceau commun.
